(19) Europäisches Patentamt
European Patent Office
Office européen des brevets

(11) EP 0 548 030 B1

(12) **EUROPEAN PATENT SPECIFICATION**

(45) Date of publication and mention of the grant of the patent:
**30.09.1998 Bulletin 1998/40**

(51) Int Cl.6: **G06K 9/80**

(21) Application number: **92830656.2**

(22) Date of filing: **04.12.1992**

# (54) Character recognition

Zeichenerkennung

Reconnaissance de caractères

(84) Designated Contracting States:
**DE FR GB IT NL**

(30) Priority: **19.12.1991 IT RM910955**
**19.12.1991 IT RM910956**
**23.10.1992 IT RM920776**

(43) Date of publication of application:
**23.06.1993 Bulletin 1993/25**

(73) Proprietor: **TEXAS INSTRUMENTS INCORPORATED**
**Dallas, Texas 75243 (US)**

(72) Inventors:
- **Gallo, Girolamo**
**I-71100 Foggia (IT)**
- **Marotta, Giulio**
**I-02100 Cittaducale (RI) (IT)**

(74) Representative: **Taliercio, Antonio et al**
**ING. BARZANO' & ZANARDO ROMA S.p.A.**
**Via Piemonte, 26**
**00187 Roma (IT)**

(56) References cited:

| | |
|---|---|
| US-A- 3 522 586 | US-A- 4 119 946 |
| US-A- 4 288 782 | US-A- 4 866 646 |

- **PATENT ABSTRACTS OF JAPAN vol. 12, no. 463 (P-796)6 December 1988 & JP-A-63 186 179 (ICHIKAWA HIROKO) 1 August 1988**
- **PATENT ABSTRACTS OF JAPAN vol. 14, no. 521 (P-1131)15 November 1990 & JP-A-02 217 981 (KAMATA HIROSHI) 30 August 1990**
- **PATENT ABSTRACTS OF JAPAN vol. 14, no. 226 (P-1047)14 May 1990 & JP-A-02 053 193 (YOSHIDA KIMIYOSHI) 22 February 1990**
- **PATENT ABSTRACTS OF JAPAN vol. 12, no. 483 (P-802)16 December 1988 & JP-A-63 198 179 (CANON INC) 16 August 1988**
- **IBM TECHNICAL DISCLOSURE BULLETIN. vol. 10, no. 4 , September 1967 , NEW YORK US pages 380 - 381 'CHARACTER RECOGNITION BY CONTINUOUS TIME DOMAIN COMPARISON'**
- **PATENT ABSTRACTS OF JAPAN vol. 10, no. 251 (E-432)28 August 1986 & JP-A-61 078 222 (SATO TETSUO) 21 April 1986**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European Patent Convention).

EP 0 548 030 B1

## Description

This invention relates to a method and apparatus for character recognition, particularly the recognition of letters, numerals, signs and punctuation symbols.

In keyboardless input schemes for computer systems, for example, instructions or data can be input by the user of the system by means of a pen-like stylus on an input/output screen. An example of such a screen is a touch sensitive monitor. The input instructions or data can be handwritten script, numbers, or any other form of handwritten character. In these types of systems it is essential for the computer to "understand" the input it has been given by the user and to recognize and read the input characters.

There are a number of known systems capable of recognizing and reading input characters. One such system is disclosed in US 4,972,496. This patent discloses a system including a transparent input screen that generates positional information corresponding to the positions at which a stylus contacts the screen (i.e. the positional information of the character) and also displays to the user the input that has been entered. The system further includes a computer which is programmed to compile the positional information into "strokes" made by the stylus. The strokes are analyzed to identify the starting point of each stroke, the end of each stroke, the slope of the stroke, the stroke centroid, the rate of change of the slope, and where a character comprises more than one stroke whether it was the first, second, etc. Once the stroke has been analyzed a personalized data base which is unique to a specific user is accessed to identify the character which most closely corresponds to the character under analysis.

This system is relatively complex to implement using dedicated hardware due to the detailed stroke analysis which must be conducted. In addition it relies on a personalized data base for each user. This can mean that a large amount of memory is wasted if a given system is used by many users. If no personalized data base is set up the degree of recognition of the system can fall to an unacceptable level. Since this system relies on stroke analysis, it is important for all users to write the characters in a predetermined conventional manner. Recognition is severely inhibited when the user adopts a writing style where the strokes are different from the predetermined conventional manner. Even though the free style characters may look very similar to the conventional characters, recognition may not be accurate since the stroke analysis indicates a different character than that which has been written.

JP-A-63 186 also discloses character recognition by means of comparison of topological features in a recognition dictionary.

JP-A-02 217 981 determines positions of features in an unknown character.

US-A-4 866 646 requires inputting characters to individual frames.

One object of the present invention is to provide a character recognition system which overcomes at least some of the disadvantaaes of known systems.

Another object of the present invention is to provide a simple character recognition system which has improved recognition rate even when no personalized data base is utilized.

The invention is defined in claims 1 and 12.

The system of the invention has the advantages that there is no need for time consuming and complex stroke analysis of the character and that a data base will provide recognition of about upwards of 95% of all characters input by a user.

Reference will now be made, by way of example, to the accompanying drawings, in which:-

Figure 1 is a block diagram of a character recognition system according to one aspect of the present invention;
Figure 2 is a diagram of an example of a program memory displayed on the screen of the system;
Figure 3 is a diagram showing some examples of characters with frame constraint defaults;
Figure 4 is a diagram of an ASCII format of the character A;
Figure 5 is a diagram of a pattern format of the character A;
Figures 6a-6h in combination are a diagram showing a topological feature set used to identify any character;
Figures 7 and 8 are diagrams for showing how the character is recognized; and
Figure 9 is a flow chart illustrating the punctuation recognition process;
Figure 10 is a block diagram of a circuit for storing geometrical pattems and for comparing the pattern to be classified thereto;
Figure 11 is a circuit diagram for an array of storage and comparison cells for use in the Figure 10 circuit;
Figure 12 is a different embodiment of the array for use with the Figure 10 circuit;
Figure 13 is a block diagram of a further embodiment of classification circuitry for digital patterns or configurations;
Figure 14 is a circuit diagram of the storage and comparison cell array for use in the Figure 13 circuit;
Figure 15 is a circuit diagram of a logic block for use in the Figure 13 circuit; and
Figure 16 is a circuit diagram of an alternative storage and comparison cell array for use in the Figure 13 circuit.

Referring to Figure 1, a character recognition system is shown generally at 10. The system comprises a micro-computer 12 having a monitor 14. The computer is connected to a touch sensitive screen, for example an LCD graphic digitizer 16. It is possible to replace the monitor with a touch sensitive monitor and dispense with the separate touch sensitive screen . A pen-like stylus 18 may be used on the touch sensitive screen to input instructions, data or the like to the computer. A user can write commands directly onto the screen. For the most accurate recognition of the commands, the characters should preferably be entered in a frame shown generally at 20. The touch sensitive screen menu used by the user to enter information is shown in Figure 2. The main options available are shown in blocks 22 and may be activated by touching the stylus on the appropriate box 24a-f.

The frame 20 is shown in greater detail in Figure 3. It comprises a top frame 26, a middle frame 28 and a bottom frame 30. Each character should be entered into one column 32. The position of the character is used to aid in the recognition of that character. For example "short" lower case letters such as a, c, e, m, n, o, r, s, u, v, w, x and z should be entered in the middle frame and should preferably be of such a size that they do not extend into the other frames. Taller lower case letters such as b, d, f, h, i, k, 1, and t should have a larger vertical size than the smaller lower case letters and should be entered in the top and middle frames. Lower case letters with "tail" such as g, j, p, q and y should preferably be entered such that the tails extend into the bottom frame. Upper case letters and numbers should generally be entered in the top and middle frames of any given column 32. Other characters such as punctuation for example should be entered in their normal positions relative to the alphanumeric characters.

Adhering to the frame constraints illustrated above allows the system to recognize the difference between "c" and "C" for example. It is possible for the operator to set the size of the frames or to use the standard frame. In addition, for different alphabets, such as Japanese characters, the frame constraints will obviously be suited to facilitate recognition of those characters. The full detail of how the frame constraints aid recognition will be described in more detail below.

Once the handwritten data has been entered on the LCD graphic digitizer 16, the output of the digitizer is downloaded to the computer into what is called a stroke format file (STK file). In such a format, the character is described by a sequence of strokes each of which is made up of a series of coordinates between a pen-down and pen-up condition. Figure 4 shows an ASCII format translation of the content of a stroke file in binary form of the letter A. The output from the digitizer is then "pre-processed" before character recognition is implemented. This pre-processing comprises character scaling, centering, digital noise filtering and fitting the digital information into a pixel matrix of a given size, for example, a 16x16 matrix.

After pre-processing, the character undergoes a recognition process which comprises two basic steps:

extraction of the topological characteristics (features) of the input handwritten character; and
recognition by 'fuzzy' comparison with a set of reference characters stored in a memory.

The handwriting recognition is performed on each individual character once it has been written. This allows for total freedom in writing the characters according to the user's style, i.e. it is not necessary to enter the character as a particular sequence of strokes. This can allow for variations in the direction of movement of the pen and corrections can be effected after the characters have been originally written. The recognition is mainly based on symbol's optical characteristics. If there are any ambiguities such as between for example "S" and "5", the actual number of strokes used to make up the character is used to solve the ambiguities, i.e. in this case one for the S and two or more for the 5. As previously stated, the recognition of uppercase and lowercase letters with the same shape (e.g. 'c' and 'C') is improved by the user writing in fields or frames.

This particular system is optimized for characters as well as all other signs usually found in a standard computer keyboard. However, the principle is equally valid for Japanese or other alphabets, for example. The system can be used in a writer dependent mode, in which it shows better recognition rate. However, very good recognition is possible when used as a writer-independent system, i.e. without the system training. The user can enter his own reference character set through a user friendly character mode. Once adequately trained, the system can accept any handwriting style. For example, one user may train the system to recognize multiple character styles for a given alphabet letter, or his special way of writing a given character. Alternatively, the system can be used in "untrained mode" with a standard set of characters.

The pre-processing step initially converts the STK format described above to a pattern (PTN) format of a normalized 16x16 matrix. This PTN format is shown in Figure 5. The remainder of the character pre-processing is carried out as follows:

Point Interpolation/Smoothing occurs as the digitiser converts points at a constant rate, the distance between two consecutive points is proportional to the pen speed. If the writing speed is low, some points can be very close to each other resulting in a digitising noise. Alternatively, if writing speed is relatively fast, points can be well spaced from each other, leaving holes in the stroke. To overcome this drawback, an interpolation/smoothing routine is used to add interpolated points whenever points are too far apart and remove points which are too close together.

Character boundaries are evaluated and the points are scaled to fit into a normalized 16x16 matrix. X and Y components are scaled with different scaling factors to completely fill the matrix. If the ratio of either X-size/Y-size or Y-size/X-size is larger than a given threshold value (typically 4) only the larger component (X or Y) of the character is scaled. This is to avoid improper expansion of 'slim' characters such as "l" or "-".

Character mapping which involves the number of points belonging to each of 16x16 pixels being counted and their average value computed. A threshold value (about 1/8 of the average value) is used to establish if a given pixel of the matrix is to be black (1) or white (0). If the number of points in a given pixel is greater than the threshold, the corresponding bit is set to 1, otherwise it is set to 0. Additional data are added to the character matrix to specify the character identifier (only available if the character is a member of the reference set), these data include the number of strokes of the character and the frame position. This information will be used during the recognition process, as it will be described below. The frame position is coded by assigning a score to each of the three writing frames: 1 for the top frame 26, 2 for the central one 28, and 4 for the bottom one 30. For instance, character 'g' is normally written in the central and bottom frames, so its frame number will be 2+4=6. Frame numbers are evaluated by checking the character position on the writing field. In order to disregard small framing errors by the user, the active area of the top and bottom fields is actually slightly smaller than indicated by the frame lines. This means that the actual boundary between the central and top frame is slightly higher than shown and the boundary between the central and bottom frame is slightly lower than shown. The amount of this shifts may be adjusted by the user.

The result of the character pre-processing stage is a 16x16 matrix in pattern format, each element of the matrix being a pixel of the character image. Allowed values for a given element are 0 (white pixel) and 1 (black pixel) as it is shown in Figure 5. At the top of the matrix is a header data line containing the following information:-

a) Character identifier (available only if the character is a member of the reference set);
b) Number of strokes; and
c) Frame positioning.

The first step of the recognition process consists in extracting from the original 16x16 matrix a topological description or code of the character. Recognition is then performed by comparing input character code with the codes of the reference characters collected by the user during the learning phase or from the standard set in the memory. The code basically contains three types of information:

i) Feature extraction code;
ii) Intersection code; and
iii) Frame position, stroke number and character identifier (the latter only being available if the character is a member of the reference set).

Feature extraction is the key step of the recognition algorithm. It performs a faithful description of character's topology to make recognition very accurate. This operation is performed by using a 'topological feature set'. It consists of the 99 16x16 matrices shown in figures 6a-6h representing elementary geometrical structures. These matrices have been obtained through a complex work of optimization performed using several character sets from many different people.

The feature extraction process basically consists of overlapping the character to the i-th (i=1,...,99) feature matrix and then counting the number of black pixels they have in common. This operation can be easily implemented by means of a bitwise AND function. The counting result X is then compared with three threshold values, T1, T2, T3;

if X<=T1 the response fi of the i-th feature is set to 0,
if Tl<X<=T2 the response fi of the i-th feature is set to 1,
if T2<X<=T3 the response fi of the i-th feature is set to 2,
if X>=T3 the response fi of the i-th feature is set to 3.

This process is shown in Figure 7. Therefore, the result of the described operation is an array of 99 integer values called feature extraction code representing the response of the feature set to the given character. T1, T2, T3 are chosen from simulations of the system and are typically set to be T1=2, T2=3, T3=6.

The intersection code contains additional information on the character topology. It consists of 32 integer values Ni (i=1,...32), each of them being the number of intersections of the character with the 16 horizontal and the 16 vertical lines of the matrix. An example of this operation is shown in Figure 8.

The last field of the character code contains the frame position, the number of strokes of the character and, if the character is a member of the learning sets, its identifier, provided by the user.

Therefore, after the coding process, a given character is represented by an array of 133 integers: 99 from feature extraction, 32 from intersections, 1 for stroke number and 1 for frame position.

Recognition is performed by comparing bit-by-bit the code of the unknown input character with the coded characters in the reference set having the same frame number. Characters with frame numbers different from that of the input character are disregarded during the comparison. This has two important advantages. First, it allows recognition of characters with the same shape and different size. Secondly, the recognition process is relatively faster because it involves a lower number of comparisons. As a result, the score Sj assigned to the j-th comparisons (j=1,...,Ncar) is given by:

$$Sj=SW*(S-Sj)+\sum_{i=1}^{99}(fi-fij)+IW*\sum_{i=1}^{32}(Ni-Nij)$$

where:-

S = stroke number of the input character,
Sj = stroke number of the j-th reference character,
fi = response of the i-th feature to the input character,
fij = response of the i-th feature to the j-th reference character,
Ni = number of intersections of the i-th line with the input character,
Nij = number of intersections of the i-th line with the j-th reference character,
SW = stroke weight,
IW = intersection weight.

This score is evaluated for each of the Ncar reference characters. The identifier of the reference character with the minimum score is assigned to the unknown input symbol.

The learning process which may be used to educate the computer of the handwriting styles of the user is explained in more detail below. If the user does not wish to educate the system, he may rely on recognition being effected by virtue either of a reference set permanently stored on the system or that of another user.

The learning process consists in collecting a suitable number of examples for each symbol the user wants to be recognized. These symbols will form the reference set during the recognition process. Two different learning (or training) modes are available. The first is known as the built-in learning mode. In this mode, the program requests the user to write examples of the symbols listed in a command file. This file contains a complete list of the symbols to be recognized with the corresponding frame constraints. The list of the symbols and the frame constraints can be changed by the user, depending upon the symbols he/she wants to be recognized and his/her handwriting style. Multiple frame constraint values are allowed for each symbol. In order to avoid insertion of bad characters in the learning set the program will reject characters with frame positions different from that stated in the file.

The second mode is the interactive learning mode. The user writes symbols in the order he/she likes. Then recognition is performed. Each time the recogniser fails, unrecognized symbols are automatically inserted in the learning (or reference) set. Also, characters with not allowed frame positions will be rejected.

After the built-in learning mode has been run, the recognition capability can be further improved by adding other characters to the learning set through the interactive learning mode.

In addition to the recognition of characters the system can also recognize punctuation symbols. The system can perform recognition of symbols such as commas, colons, semicolons, full stops, etc. This recognition process does not require any learning, therefore punctuation recognition is completely user independent. The flow chart of the process is shown in figure 9.

After acquisition, the size of the boxes containing each stroke of the character is measured. If all boxes have both x and y dimensions smaller than the punctuation threshold (Pth) the program switches to the 'punctuation mode'. Otherwise it returns to the 'character mode' described above.

The number of isolated parts of the character is evaluated. This function is implemented by counting the number of boxes containing the geometrically separated character strokes. All boxes overlapping each other are merged into one single box.

The purpose of this approach is distinguishing between a symbol made up of two overlapped points (2 strokes, but 1 box) that is still a full stop and another made up of two separated points (2 strokes, 2 boxes), that is a colon. Once the number of separated parts of the character has been calculated, three different cases may occur:

a) If there are more than two boxes occupied, the program exits 'punctuation mode' and returns to 'character mode' (no punctuation symbol among ; , : . is made up of three separated parts).

b) If only one box is occupied, the position of the box is evaluated: if it is entirely located under the horizontal line in the middle of the central frame, the program goes to comma/point routine. Otherwise it exits the 'punctuation mode' because the symbol is probably a lowercase letter of small size. The comma/point routine checks whether the punctuation symbol is a comma or a full stop. It uses two different pieces of information: box size and position. It calculates the following score:

$$Score = PW*(af[1]-fAC-FPB)+DeltaXch+DeltaYch-2*CTH$$

where:

PW is a parameter called punctuation weight, typically this is set to PW=100,
af[1] is the position of the lower edge of the box,
fAC is the position of the separation line between central and bottom frames
FPB is the frame punctuation band, that is a threshold value,
DeltaXch is the box X-size,
DeltaYch is the box Y-size,
CTH is the comma/point threshold.

If score >0 the character is recognized as comma, otherwise it is recognized as full stop.

c) If there are two separate boxes occupied, the programs exits 'punctuation mode' and returns to character mode in the following two cases:

- the upper box overlaps the top frame,
- either X or Y size of the upper box exceeds CTH.

Otherwise, the comma/point routine described above is applied to the lower box. If score >0 the character is recognized as semicolon, otherwise it is recognized as colon.

This HPCR (hand printed character recognition) project is capable of being implemented on hardware. To ease the migration to silicon, when necessary, the number of black pixels has been chosen constant and equal to 16. However this is merely a preferred choice and is not intended to be limiting.

Migrating the above described system on silicon would provide several advantages, the most relevant being:

an increase in speed which would mean that dedicated hardware could exploit massive parallel architecture to perform the numerous comparison operations needed to implement both the feature extraction and the associative memory in a much shorter time.

The power consumption would be minimized and the dedicated hardware might be activated only when recognition is to be performed. Data base memory could be integrated on chip, thus saving the power needed to drive the external buses.

Dedicated chips may be employed in low-cost consumer products where powerful, state-of-the-art micro chips are not available.

It has to be mentioned that the system lends itself very well to silicon implementation. In fact, the operations to be performed, though numerous, are very simple in themselves (basically AND and EXNOR). The massively parallel architecture needed for high speed might be built around DRAM memory cores (used for data base/feature storage) in a relatively simple way thanks to the internal structure of DRAM themselves.

As previously mentioned, there are a number of ways in which the system can be implemented on hardware. Four main embodiments are described below. The first two concern a circuit for extracting geometrical or topographical features from the digital patterns representing the characters, whilst the second two embodiments concern classification of the digital patterns as a result of comparison thereof with the standard or reference patterns.

By referring to Figure 10, it can be noted that the circuitry according to the first such embodiment comprises an input service or buffer memory 100 effectively arranged as a K-bit serial register having a serial input port and a parallel output port of K-bits, DL1, DL2,...., DLK, to which both the N elementary geometrical patterns, and the pattern to be classified are supplied.

The K outputs of the input buffer are coupled to the column inputs of an array of storage and comparison cells, arranged as N rows by K columns in, for example, a ram 102.

Each storage and comparison cell is adapted to store a digital data item, to compare an input data item to the data item stored therein and to generate a current if both data items are 1.

The row addressing of said array of N rows and K columns of storage and comparison cells is carried out by means of a decode circuitry 104 of conventional construction and operation. It receives an address consisting of a digital log N-bit word and is connected to the array of storage and comparison cells by means of N lines (Word Lines) WL1, WL2,...., WLN.

The array of storage and comparison cells have an output line for each row and have, therefore, N output lines (Bit Lines) BL1, BL2,...., BLN, by which it is connected to an output service or buffer memory 106 having N parallel inputs and a serial output, wherefrom the transcoded pattern is obtained.

Lastly, a control logic 108 is provided for driving the decoder as well as both the input and the output buffers.

Before examining the circuital implementation of the block including the storage and comparison array, the operation mode will be explained in its whole.

It is assumed that an unknown character or a standard character is to be transcoded in geometrical terms as a function of N elementary patterns representing as many elementary geometrical features. When each matrix is "unrolled" it can be seen that each character or geometrical feature is represented by a pattern consisting of a K-bit string.

A preliminary step to be carried out for transcoding provides for loading all of the concerned elementary geometrical patterns into the storage and comparison cell array.

In this respect, each K-bit elementary geometrical pattern is serially loaded into the K locations of the register comprising the input buffer. This transfer is driven by the control logic.

When all of the elementary geometrical patterns have been loaded into the array, the circuit is ready to transcode a standard or unknown pattern as a function thereof.

The pattern to be transcoded is therefore serially loaded into the register and then identically and simultaneously transferred to all rows of said storage and comparison cell array. These cells, which already contain a bit of the elementary geometrical patterns, are adapted to compare the two bits and to generate a current if and only if both bits have a logic 1 value. In other words. for each row, the pattem to be transcoded is compared to an elementary geometrical pattern and a current is generated for each pair of homologous 1 values.

Since all of the cells of a row are connected to a single output line (Bit Line) BL1, BL2,...., BLN and since the currents are therefore additive, the Bit Line of each row will be run by a current proportional to the number of coincident 1 values that can be found between the bits of the pattern to be transcoded and the homologous bits of the elementary geometrical pattern stored therein. All of the N output lines BL1, BL2,..... BLN are connected through a threshold discrimator circuit (not shown in Figure 10) and a Schmitt trigger circuit (not shown in Figure 10) so as to output a "0" signal when the line current is less than and a " 1" signal when it is greater than a predetermined threshold value. All outputs are parallel loaded into an output buffer memory which serially furnishes a N-bit digital pattern representing the transcodification in geometrical terms.

As above mentioned, the input and output service or buffer memories, the decoder used for row addressing the storage and comparison cell array, as well as the control logic that drives and synchronizes the operation of the whole circuit are conventionally operating components, so that only the circuitry of said array will now be explained in greater detail.

The above quoted array of storage and comparison cells is partially shown in Figure 11. It comprises N x K cells, arranged as N rows and K columns.

All of the cells of a column simultaneously receive the bits of the patterns to be stored or to be compared through the data lines DL1, DL2,...., DLK from the corresponding locations of the input register, and all of the cells of a row simultaneously receive the address information from the address decoder block through the address lines (Word Lines) WL1, WL2,...., WLN and their outputs are connected to the output buffer through the output lines (Bit Lines) BL1, BL2,...., BLN, respectively. Furthermore, a common bias voltage Vbias, the function of which will be apparent hereinafter, is coupled to all of the cells of the array.

Each cell can be considered as consisting of two sections for respectively carrying out the function to store a bit of an elementary geometrical pattern and the function to compare the bit stored therein to the homologous bit of the pattern to be transcoded in geometrical terms as well as to generate a current only when the values of both compared bits are 1.

The storage section includes a MOS transistor M8, this can be considered as an enabling or addressing transistor having its gate region connected to the address line, for instance to line WL1 for the cells of the first row, said transistor being inserted between the data line (or column line), f.i. DL1, for the cells of the first column, and a node Q to which two inverters INV1 and INV2 are connected, back-to-back coupled, in order to form a memory cell.

From an operation stand point, it can be easily observed that, when a bit is to be stored in said memory cell INV1-INV2, for instance a bit "1", this is made possible through data line DL1, provided that the concerned cell is addressed through address line WL1 thereby turning transistor M8 on. Transistor M8, therefore, acts as a switch. The stored data remain available on node Q.

In conclusion, if a given elementary geometrical pattern is to be stored in row i of said array, as it has already been noted, it is at first serially stored into the input shift register and subsequently it is parallel transferred into the cells of row i of the array by simply addressing the cells of such row through line WLi, whilst the cells of all remaining rows are disabled.

As far as the comparison section is concerned, each cell includes a MOS transistor M7 acting as a current generator, connected to ground and having its gate region driven by voltage Vbias.

Two more MOS transistors M1, M2, having their gate regions connected to data line DL1 and to the node Q, respectively, are cascade connected to transistor M7.

From an operation view point, it can be observed that, for a comparison to be made between the data item stored in memory cell INV1-INV2 and available on node Q and the data item available on data line DL1, it will be sufficient to turn transistor M7 on by means of the bias voltage Vbias. It can be seen that only when the data items available on node Q and on data line DL1 are both "1", will transistors M1 and M2 both be on and transistor M7 will be able to supply an output current Iout through output line BL1. There is no other possibility for a current Iout to be supplied.

Since each cell row contains an elementary geometrical pattern and for each cell row a comparison is carried out between a pattern to be transcoded and the elementary geometrical pattem stored therein and since all of the cells of a row i are connected to the same output line BLi, the output current supplied by said line BLi will be the sum of the currents supplied to said line by all cells where both the stored data item and the data item compared thereto will have logic " 1 " value.

Of course, during the loading step of the elementary geometrical patterns, it will be convenient to reset voltage Vbias to zero, thereby turning off current generator transistor M7. This avoids unnecessary current absorption.

Each output line BLi is terminated by two P-MOS type transistors M3, M4, connected as a current mirror arrangement, so as to supply to output node N1 a current proportional to current Iout. In addition, a Schmitt trigger circuit 120 is connected to node N1. Two more MOS transistor M5, M6 are also connected to said node N1 (transistor M6 being common to all of the rows) and are arranged as a current mirror so that a predetermined reference current Iref is furnished by said output node NI, thereby establishing a threshold value. If current Iout is greater than this threshold value, then node NI will be'in a logic high state and the Schmitt trigger circuit will be switched.

If current Iout is smaller than this threshold value, then node N1 will be in a logic low state and the Schmitt trigger circuits will therefore be "1" in respect of all rows when the number of cells where both the stored data item and the compared data item are "1" is greater than an experimentally predetermined minimum number.

The outputs of the Schmitt trigger circuits are connected to the parallel inputs of the output service or buffer memory, whose serial-type output represents the transcodification in geometrical terms of the input pattern as a function of the elementary geometrical patterns stored in said array of storage and comparison cells.

Referring now to Figure 12, a different possible implementation of the storage and comparison cell array is shown. This second embodiment is designed for an application where there is no need to change the preliminary stored contents of said cells and it is implemented by means of ROM memory cells. The main advantage of this approach is to be found in the smaller area of a silicon wafer needed to implement a ROM cell rather than a static or dynamic RAM cell. The block diagram of the device is unchanged, except in so far as the address decoder is concerned: in fact in this case it can be omitted.

Loading the elementary geometrical patterns is carried out only once during the whole useful life of the device, by suitably connecting programmable contacts PC of Figure 4, i.e. a reference set is pre-programmed into the memory and the system is not capable of "learning" new characters.

Gate region of transistor M2 is connected to ground or to supply voltage Vcc depending on whether a logic " 1" or a logic "0" is to be loaded into the memory cell.

Such an embodiment operates identically to the first embodiment: in fact, a current will be supplied to line BL1 (by transistor M7) only when the gate region of transistor M2 is connected to voltage Vcc and when the logic value of the data item coupled to gate region of transistor M1 is "1". The logic operation performed is apparently an AND operation, in both embodiments.

The third embodiment is physically similar to the first embodiment in certain respects and the differences are described in detail below. Referring to Figure 13, it can be observed that the circuitry comprises an intermediate memory or input buffer 300, that in effect can be implemented as a K-bit serial register having a serial input and a K-bit parallel output. This input buffer is also capable to supplying the above said K parallel outputs not only in their true form but also in their negated or complemented form, namely DL1, $\underline{DL1}$, DL2, $\underline{DL2}$,...., DLK, $\underline{DLK}$.

The K outputs of the input buffer, together with their complemented forms, are applied to the column inputs of an assembly or array of storage and comparison cells, arranged as N rows and K columns of, for example, a RAM 302. Each column receives both the true and the complemented data items, as it will be described in more detail below.

Each storage and comparison cell of the array is adapted to store a digital data item, to compare the input data item to the data item already stored therein and then to generate a current if a coincidence exits between the stored data item and the input data item.

The rows of said N-row by K-column storage and comparison cell array are addressed by means of a suitable decoder circuitry 304 which is connected to the storage and comparison cell array by means of N lines (Word Lines) WL1, WL2,...., WLN.

The storage and comparison cell array in the RAM 302 has an output for each row, namely N output lines (Bit Lines) BL1, BL2,...., BLN, to which a Logic Block 306 is connected, and which is adapted to carry out, for example, a FUZZY OR function.

Such a function consists in selecting among N line currents the one having the maximum current. Thus, from a practical stand point and by carrying out an analog-to-digital conversion, such a function consists in receiving N analog current inputs and in generating a digital string of N output bits comprising all but one 0's and one 1 corresponding to the input line run by the maximum current.

Lastly, a coder 308 having N inputs and log 2N outputs, codes and classifies said output string output from the logic block.

Considering again the application example of the character acknowledgement or recognition, it is assumed that an unknown character is to be acknowledged or recognised and classified by means of a comparison thereof to a set of example or standard samples of the same character, each of which is expressed as a matrix of X rows by Y columns, for a total of K bits. When each matrix is "unrolled", it can be realised that each character is expressed by a configuration or pattern consisting of a string of K bits.

The preliminary step for this comparison to be effected is loading all of the sample patterns, whether standard or user dependant, into the storage and comparison cell array. Aiming at this result, each K-bit sample pattern is serially loaded into the K locations of the register acting as an input buffer. Logic circuitry 310 controls this loading step. When this loading step for loading the sample pattern into the register is completed, the control logic circuitry effects a parallel loading step by means of which the whole K-bit string is transferred from the register into a storage and comparison cell row of the array, a bit for each cell. The row addressing function is effected by means of the decoder block again under control of the control logic circuitry.

When all of the sample patterns have been loaded into the array, the circuit is ready to classify a new unknown pattern to be acknowledged or recognised. This unknown pattern is therefore serially loaded into the register and then identically and simultaneously transferred together with its negated or complemented form into all of the rows of the storage and comparison cell array. These cells, each of which already contains a bit of the sample patterns, are adapted to compare the bit pertaining to them under column order namely bit 1 for column 1 and so on - to the bit stored therein and to generate a current when and only when the two bits coincide. Should no coincidence exists, no current is generated.

In other words, for each row, the unknown pattern is compared to a sample pattern and a current is generated for each coincidence of homologous bits. Since all of the cells of a row are connected to a single output line (Bit Line) BL1, BL2,...., BLN, and since the currents generated in the individual cells are additive, the Bit Line of each row will be run by a current that is proportional to the number of coincidences that are realized in the row between the bits of the unknown pattern to be classified and the homologous bits of the sample pattern stored therein.

Since the comparison is carried out in parallel mode for each individual row and contemporaneously in all rows, the N output lines (Bit Lines) will be run by different currents, the intensities of which are true representations of the number of coincidences between the bits of the unknown pattern and the bits of the respective sample patterns. Therefore, they are an indication of the similarity ratio between the unknown pattern and the sample pattern stored in each individual row.

The N lines BL1, BL2...., BLN are connected to the FUZZY or logic block which receives, therefore, N input analog signals and supplies a digital output signal consisting of a N-bit string, the bits of which are all 0's except a bit 1 corresponding to the Bit Line having the maximum current.

The conclusive step of the method is coding the N-bit digital output from the logic block into a code of log 2N bits which then identifies and classifies the unknown pattern in the light of the known standard sample patterns.

The storage and comparison cell array is partially shown in Figure 14.

It comprises N x K cells arranged as N rows by K columns. All of the cells of a column contemporaneously receive both the true data, through data lines DL1, DL2,...., DLK, and the negated data through data lines $\underline{DL1}$, $\underline{DL2}$,...., $\underline{DLK}$ from the corresponding location of the shift register operating as input buffer. All of the cells of a row contemporaneously receive the address signals through address lines WL1, WL2,..... WLN from the address decoder and are connected through output lines or so-called Bit Lines BL1, BL2,... BLN, respectively, to corresponding input port of the FUZZY OR logic block. Furthermore, all of the cells of the array receive a common bias voltage Vbias, the function of which will subsequently be described.

Each cell can be considered as consisting of two sections, namely a storage section adapted to store a bit of a sample pattern and a comparison section adapted to compare thereto an homologous bit of the pattern to be classified and to generate a current if the two compared bits coincide.

The storage section of each cell comprises a MOS transistor M15, that can be considered as an enable or address transistor having its gate region connected to the address line, for instance to address line WLI for the cells of the first row, and inserted between the true data line, for instance DL1, for the cells of the first column, and node Q. Two back-to-back parallel connected inverters INVI and INV2 are linked to node Q so as to build up a memory or storage cell. Node $\underline{Q}$, that is the other interconnection node of said two inverters, corresponds to node Q.

From an operational view point, it can be easily observed that, when a bit is to be stored in memory cell INVI-INV2, this is made possible through data line DLI on condition that the cell is addressed through enable line WLI that turns transistor M15 on. Transistor M15, therefore, operates as a switch. The data item to be stored is available, therefore, on node Q.

In conclusion, when a sample pattern is to be stored in row i of the array, then, as it has been seen, it is first stored in the serial register and subsequently transferred to the cells of row i of the array by simply addressing such row of the array through line WLi, while all remaining rows are disabled or deselected.

As far as the comparison section is concerned, each cell comprises, for example, a MOS transistor M16 operating as a current generator connected to ground and biased by voltage Vbias on it gate region. Two parallel branches depart from the drain region of transistor M16 each of which comprises two serially connected MOS transistors M11, M13, and M12, M14, respectively, so arranged that the first two corresponding transistors M11 and M12 have their gate regions connected to the true data and negated data lines, respectively, namely DL1 and $\underline{DL1}$, for instance; the second two corresponding transistors M13 and M14 have their gate regions connected to the two nodes Q and $\underline{Q}$ of the storage or memory cell INV1-INV2. The two transistors M11, M12 are both connected to the row output line, for instance BL1.

From an operational view point, it can be observed that, for a comparison to be carried out between a data item stored in memory cell INV1-INV2 (which is determined by the high/low logic state of the two nodes Q and $\underline{Q}$) and a data item to be compared (which data item is furnished together with its corresponding negated or complemented data item through the two lines DL1 and $\underline{DL1}$) it will be sufficient to turn on transistor M16 by means of the bias voltage Vbias. Assuming that, for instance, node Q is 1 and node $\underline{Q}$ is therefore 0, when the data item to be compared is 1, then both transistor M11 and transistor M13 are turned on, while both transistors M12 and M14 are turned off. In this condition, current Iout flowing in output line BLI is the same current generated in transistor M16. Should the data item to be compared be 0, then transistor M11 would be turned off and, since also transistor M14 is also turned off, generator transistor M16 is insulated and does not contribute to the current of the output line BL1.

Since the cells of each row contain a sample pattern and a comparison between the pattern to be classified and the sample pattern stored therein is carried out in each row and since all of the cells of a row are connected to the same output line BL, at the output of line BL a current will be obtained that is the sum of all currents supplied to the concerned line by all cells where a coincidence occurred between the stored bit and the compared bit.

The truth table below will explain the possible combinations:

| DL1 | $\underline{DL1}$ | Q | $\underline{Q}$ | M11 | M12 | M13 | M14 | Iout |
|---|---|---|---|---|---|---|---|---|
| 0 | 1 | 0 | 1 | OFF | ON | OFF | ON | 1 |
| 0 | 1 | 1 | 0 | OFF | ON | ON | OFF | 0 |
| 1 | 0 | 0 | 1 | ON | OFF | OFF | ON | 0 |
| 1 | 0 | 1 | 0 | ON | OFF | ON | OFF | 1 |

Of course, during the sample pattern loading step, it will be convenient to make Vbias = 0, thereby turning generator transistor M16 off, in order to prevent unnecessary current absorption.

Since the comparison between the pattern to be classified and all sample patterns stored in the array is carried out in parallel and contemporaneously for all of them, the comprehensive output will comprise N output lines BL1, BL2...., BLN each bearing a current which is proportional to the number of cells of each respective row wherein a coincidence has been established between the data item stored therein and the data item related to the homologous bit of the pattern compared for classification.

As a result thereof, the line BLi (where i=1,2,...N) having the maximum current will be the one associated to the row containing a sample pattern with respect to which the unknown pattern to be classified will have maximum "similarity" grade.

By referring now to Figure 15, the circuitry by which the logic block function is implemented will now be discussed. Assuming N input lines BL1, BL2...., BLN bearing different currents and, therefore, assuming N analog input signals, such function is exploited by furnishing a digital output consisting of a N-bit string comprising all 0's except the bit corresponding to the maximum current input that is 1.

The circuit shown in Figure 15 includes N identical networks, individually related to each Bit Line BLi. Each of said networks comprises, by referring to the first line BL1, a first and a second MOS transistors M21 and M22, interconnected as a current mirror circuit. The first transistor M21 is run by the line current I and consequently, the second transistor M22 is run by a current proportional to the line current by a factor K. A third transistor M23 also run by the current flowing through the second transistor M22 is inserted downstream to transistor M22. A chain of delay cells forming as a whole a delay line are connected downstream to the transistor pair M22, M23. Each delay cell comprises a first and a second MOS transistor, namely M24 of N type and M25 of P type, connected between ground and supply voltage Vcc. Between transistors M24 and M25 an inverter circuit 320 is inserted comprising two cascade connected MOS transistors, M26 and M27, with P channel and with N channel, respectively, having their gate regions interconnected together and driven by voltage IN. The interconnecting source-drain node P of the transistors M26, M27 is connected to ground through capacitor C and is connected to the interconnection node of homologous transistors M26, M27 of all subsequent cells of said cell chain.

In the same manner, the gate regions of the P-MOS transistors forming the first current mirror M21, M22 are connected to the gate regions of all homologous P-MOS transistors M25 of all cells in order to furnish voltage VPbias and also gate-drain node of N-MOS transistor M23 is connected to the gate regions of homologous transistors M24 of all delay cells (in order to furnish voltage VNbias).

As far as the operation is concerned, it should be noted that, in view of their arrangement as a current mirror, transistors M24 and M25 are run by the same current as transistors M22 and M23 and this current is proportional to the current flowing in transistor M21. This current is, in turn, proportional to the number of cells of the related line BLj where a coincidence exists between the stored data item and compared data item. Therefore, since the control signal IN is common to all of the delay cell chains, when signal IN=0, then transistor M26 is on and transistor M27 is off and consequently capacitor C is charged to logic 1 level. When currents flowing through bit lines BLj have settled, signal IN is raised to logic 1 level and consequently transistor M26 is turned off and transistor M27 is turned on. In this manner, capacitor C is discharged through transistors M27 and M24. Since transistor M24 supplies a current proportional to the current relating to bit line BLj, it will be understood that capacitor C will be discharged at a rate proportional to the bit line current. In other words, the status of node P will change over at a rate that is proportional to the magnitude of the current of the related bit line.

Since there are a number of cells M25, M26, M27, M24, a resulting delay line is implemented such that, at any change over of a cell, a change over in opposite direction occurs in the subsequent cell and the transition of signal IN will propagate along the delay line with a delay that is inversely proportional to the current of the related bit line.

Each delay line is terminated by a Schmitt trigger circuit 322. The first of the Schmitt trigger circuits to change over will be the one associated to the delay line where the minimum transition delay is developed or, in other words, the one associated to the bit line run by the maximum current.

Flip-flop circuits FF1, FF2,...., FFN are connected to the outputs of the Schmitt trigger circuits and the outputs of the Schmitt trigger circuits are combined in a N-input OR gate logic block 324, the output of which acts.as a strobe signal to disable the flip-flop circuits FF1, FF2,...., FFN. Therefore, the change or switch over of one of the Schmitt trigger circuits entails the change or switch over of the corresponding flip-flop circuit and immediately thereafter the remainder of the flip-flop circuits are maintained in the state they were in at that moment. This means that assuming that all flip-flop circuits FF1, FF2,...., FFN are initially in a certain state, for instance state 0, after the above mentioned changing over and maintenance step, they will be still in the same state, except for the one that will have changed over to state 1. This one is corresponding to the bit line having the maximum current or the maximum number of coincidences between the stored data and the compared data, in other words. Outputs OUT1, OUT2,...., OUTN, will form a string comprising all but one 0's and one 1 which, as above, will be applied to the codified block, whose output code will identify the pattern having the maximum similarity level with respect to the pattern to be classified.

By referring to Figure 16, a different circuit implementation of the storage and comparison cell array is shown. This fourth embodiment which is similar the second embodiment, is implemented by means of ROM memory cells rather than RAM memory cells and it is designed for an application in which there is no need to change the contents of the cell array. The main advantage of this solution is the smaller silicon area needed to embody a ROM memory cell with respect to a static RAM memory cell. The block diagram of the device is unaltered bearing in mind, however, that the address decoder in this case can be omitted.

Loading the sample patterns into the array is carried out only once in the useful life of the device by suitably connecting the programmable contacts shown in Figure 16. In particular, the concerned memory cells are loaded with 1 or with 0 according to whether the gate regions of the related transistors are connected to the true data lines or to the negated data lines. More particularly, if the gate region of transistor M31 is connected to line DL1, the data item virtually stored in the cell is a logic 1 state, and, if said gate region is connected to line DL1, a logic 0 state is virtually stored in said cell. Such a circuit implementation, in effect, exploits an exclusive OR function. In fact, in the former case, the cell supplies a current only if DL1=1 and $\underline{DL1}$=0 and, in the second case, it will supply a current only if DL1=0 and $\underline{DL1}$=1.

## Claims

1. A method for recognising a script written character comprising;

entering a character using a character entry means, said character being entered into a region defining a frame having at least three portions and generating a frame number indicative of the positioning of the character within the frame;
digitising the character and storing the digitised character;
extracting topological features of the digitised character;
comparing the topological feature of the digitised character with the topological features of a plurality of reference characters having a corresponding frame number;
determining which reference character in said plurality of reference characters has topological features that substantially correspond with the topological features of the digitised character thereby recognising the script written character.

2. The method as claimed in Claim 1, wherein the determining step comprises perfoming a logic process.

3. The method as claimed in Claim 1 or Claim 2, wherein the extracting step comprises extracting topological features of the digitised character in the form of one or more features codes, each feature code being indicative of one of the topological features of the digitised character.

4. The method as claimed in any preceding claim, wherein the extracting step comprises extracting an intersection code, the intersection code being indicative of the number of intersections between matrix lines and the digitised character.

5. The method as claimed in Claim 3, wherein the comparing step comprises comparing feature codes associated with the digitised character with the feature codes associated with said plurality of reference characters.

6. The method as claimed in Claim 4, wherein the comparing step comprises comparing feature and intersection codes associated with the digitised character with the feature and intersection codes associated with said plurality of reference characters.

7. The method as claimed in any of Claims 2 to 6, whereing the step of perfoming the logic process comprises evaluating a value Sj for each of the reference character (Ncar) given by;

$$Sj=SW*|S-Sj|+\underset{I=1}{\overset{99}{SUM}}|fi-fij|+IW*\underset{I=1}{\overset{32}{SUM}}|Ni - Nij|$$

where;

S =number of strokes of the input character;
Sj = number of strokes of the j-th reference character;
fi = response of the i-th feature to the input character;
fij = response of the i-th feature to the j-th reference character;
Ni = number of the intersections of the i-th line with the input character;
Nij = number of the intersections of the i-th line with the j-th reference character;
SW = stroke weight; and
IW = intersection weight;
and identifying the reference character with the lowest value Sj as the script written character.

8. The method as claimed in any preceding claim, wherein the step of entering the character comprises entering the character into a frame having an upper portion, a central portion, and a lower portion.

9. The method as claimed in any preceding claim further comprising;
assigning frame codes to the digitised character in accordance with the position of topological features of the digitised character relative to the upper, central and lower portions of the frame.

10. The method as claimed in Claim 9, wherein the step of entering the character comprises entering the character in a position relative to the upper, central and lower portions of the frame in accordance with the topological feature of the character.

**11.** The method as claimed in Claim 9 or Claim 10 further comprising;
assigning the frame number to the digitised character according to the frame codes assigned.

**12.** An apparatus for recognising a script written character comprising;
character entry means for entering a character into a region defining a frame having at least three portions and generating a frame number indicative of the positioning of the character within the frame;

means for digitising the character;
a memory for storing the digitised character;
extracting means for extracting topological features of the digitised character;
means for comparing the topological features of the digitised character with the topological features of a plurality of reference characters having a corresponding frame number;
means for determining which reference character in said plurality of reference characters has topological features that substantially correspond with the topological features of the digitised character thereby recognising the script written character.

**13.** The apparatus as claimed in Claim 12, wherein the determining means is arranged for performing a logic process.

**14.** The apparatus as claimed in Claim 12 or Claim 13, wherein the extracting means is arranged for extracting topological features of the digitised character in the form of one or more feature codes, each feature code being indicative of one of the topological features of the digitised character.

**15.** The apparatus as claimed in any of Claims 12 to 14, wherein the extracting means is arranged for extracting an intersection code, the intersection code being indicative of the number of intersections between matrix lines and the digitised character.

**16.** The apparatus as claimed in Claim 15, wherein the comparing means is arranged for comparing feature and intersection codes associated with the digitised character with the feature and intersection codes associated with said plurality of reference characters.

**17.** The apparatus as claimed in any of Claims 13 to 16 wherein the logic process comprises evaluating a value Sj for each of the reference characters (Ncar) given by;

$$Sj=SW*|S-Sj|+\sum_{I=1}^{99}|fi-fij|+IW*\sum_{I=1}^{32}|Ni - Nij|$$

where;

S = number of strokes of the imput character;
Sj = number of strokes of the j-th reference character;
fi = response of the i-th feature to the input character;
fij = response of the i-th feature to the j-th reference character;
Ni = number of the intersections of the i-th line with the input character;
Nij = number of the intersections of the i-th line with the j-th reference character;
SW = stroke weight; and
IW = intersection weight;
and identifying the reference character with the lowest value Sj as the script written character.

**18.** The apparatus as claimed in any of Claims 12 to 17, wherein the character entry means is arranged for entering the character into a frame having an upper portion, a central portion, and a lower portion.

**19.** The apparatus as claimed in Claim 18 further comprising:
means for assigning frame codes to the digitised character in accordance with the position of topological features of the digitised character relative to the upper, central and lower portions of the frame.

**20.** The apparatus as claimed in Claim 19 further comprising:
means for assigning the frame number to the digitised character according to the frame codes assigned.

**21.** The apparatus as claimed in any of Claims 12 to 20 further comprising:
an interface adapted to be coupled to a computer, said interface being arranged to pass recognised script written charactes to the computer thereby providing instructions to the computer.

**Patentansprüche**

**1.** Verfahren zum Erkennen eines mit der Hand geschriebenen Zeichens, bei dem:

ein Zeichen unter Verwendung eines Zeicheneingabemittels eingegeben wird, wobei das Zeichen in einen Bereich eingegeben wird, der einen Rahmen mit drei Abschnitten definiert, und eine Rahmenzahl erzeugt wird, die die Positionierung des Zeichens innerhalb des Rahmens angibt;
das Zeichen digitalisiert und das digitalisierte Zeichen gespeichert wird;
topologische Merkmale des digitalisierten Zeichens gewonnen werden;
das topologische Merkmal des digitalisierten Zeichens mit den topologischen Merkmalen mehrerer Referenzzeichen verglichen wird, die eine entsprechende Rahmenzahl aufweisen; und
bestimmt wird, welches Referenzzeichen der mehreren Referenzzeichen topologische Merkmale besitzt, die den topologischen Merkmalen des digitalisierten Zeichens im wesentlichen entsprechen, wodurch das mit der Hand geschriebene Zeichen erkannt wird.

**2.** Verfahren nach Anspruch 1, bei dem der Bestimmungsschritt das Durchführen eines Logik-Verfahrens umfaßt.

**3.** Verfahren nach Anspruch 1 oder Anspruch 2, bei dem der Schritt des Gewinnens das Gewinnen topologischer Merkmale des digitalisierten Zeichens in Form einer oder mehrerer Merkmalscodes umfaßt, wobei jeder Merkmalscode eines der topologischen Merkmale des digitalisierten Zeichens angibt.

**4.** Verfahren nach einem der vorhergehenden Ansprüche, bei dem der Schritt des Gewinnens das Gewinnen eines Schnittcodes umfaßt, der angibt, wie oft sich Matrixlinien und das digitalisierte Zeichen schneiden.

**5.** Verfahren nach Anspruch 3, bei dem der Schritt des Vergleichens das Vergleichen von dem digitalisierten Zeichen zugeordneten Merkmalscodes mit den mehreren Referenzzeichen zugeordneten Merkmalscodes umfaßt.

**6.** Verfahren nach Anspruch 4, bei dem der Schritt des Vergleichens das Vergleichen von dem digitalisierten Zeichen zugeordneten Merkmals- und Schnittcodes mit den mehreren Referenzzeichen zugeordneten Merkmals- und Schnittcodes umfaßt.

**7.** Verfahren nach einem der Ansprüche 2 bis 6, bei dem der Schritt des Durchführens eines Logik-Verfahrens das Berechnen eines Wertes Sj für jedes der Referenzzeichen (Ncar) umfaßt, der gegeben ist durch:

$$Sj = SW*|S-Sj| + \mathrm{SUM}_{I=1}^{99}|fi-fij| + IW*\mathrm{SUM}_{I=1}^{32}|Ni-Nij|$$

wobei

S= Anzahl der Striche des eingegebenen Zeichens;
Sj= Anzahl der Striche des j-ten Referenzzeichens;
fi= Antwort des i-ten Merkmals auf das eingegebene Zeichen;
fij= Antwort des i-ten Merkmals auf das j-te Referenzzeichen;
Ni= Anzahl der Schnitte zwischen der i-ten Linie und dem eingegebenen Zeichen;
Nij= Anzahl der Schnitte zwischen der i-ten Linie und dem j-ten Referenzzeichen;

SW= Strichgewichtung; und
IW= Schnittgewichtung;
und das Referenzzeichen mit dem kleinsten Wert Sj als das mit der Hand geschriebene Zeichen identifiziert wird.

**8.** Verfahren nach einem der vorhergehenden Ansprüche, bei dem der Schritt des Eingebens des Zeichens das Eingeben des Zeichens in einen Rahmen umfaßt, der einen oberen Abschnitt, einen mittleren Abschnitt und einen unteren Abschnitt aufweist.

**9.** Verfahren nach einem der vorhergehenden Ansprüche, bei dem darüber hinaus
Rahmencodes entsprechend der Position topologischer Merkmale des digitalisierten Zeichens relativ zum oberen, mittleren und unteren Abschnitt des Rahmens dem digitaliserten Zeichen zugeordnet werden.

**10.** Verfahren nach Anspruch 9, bei dem der Schritt des Eingebens des Zeichens das Eingeben des Zeichens an einer Position relativ zu dem oberen Abschnitt, dem mittleren Abschnitt und dem unteren Abschnitt des Rahmens entsprechend dem topologischen Merkmal des Zeichens erfolgt.

**11.** Verfahren nach Anspruch 9 oder Anspruch 10, bei dem darüber hinaus
dem digitalisierten Zeichen die Rahmenzahl entsprechend den zugeordneten Rahmencodes zugeordnet wird.

**12.** Vorrichtung zum Erkennen eines mit der Hand geschriebenen Zeichens mit

einem Zeicheneingabemittel zum Eingeben eines Zeichen in einen Bereich, der einen Rahmen mit drei Abschnitten definiert, wobei eine Rahmenzahl erzeugt wird, die die Positionierung des Zeichens innerhalb des Rahmens angibt;
Mitteln zum Digitalisieren des Zeichens;
einem Speicher zum Speichern des digitalisierten Zeichens;
einem Gewinnungsmittel zum Gewinnen topologischer Merkmale des digitalisierten Zeichens;
Mitteln zum Vergleichen der topologischen Merkmale des digitalisierten Zeichens mit den topologischen Merkmalen mehrerer Referenzzeichen, die eine entsprechende Rahmenzahl aufweisen;
Mitteln zum Bestimmen, welches Referenzzeichen der mehreren Referenzzeichen topologische Merkmale aufweist, die den topologischen Merkmalen des digitalisierten Zeichens im wesentlichen entsprechen, wodurch das mit der Hand geschriebene Zeichen erkannt wird.

**13.** Vorrichtung nach Anspruch 12, bei der das Bestimmungsmittel zum Durchführen eines Logik-Verfahrens ausgebildet ist.

**14.** Vorrichtung nach Anspruch 12 oder Anspruch 13, bei der das Gewinnungsmittel zum Gewinnen topologischer Merkmale des digitalisierten Zeichens in Form einer oder mehrerer Merkmalscodes ausgebildet ist, wobei jeder Merkmalscode eines der topologischen Merkmale des digitalisierten Zeichens angibt.

**15.** Vorrichtung nach einem der Ansprüche 12 bis 14, bei der das Gewinnungsmittel zum Gewinnen eines Schnittcodes ausgebildet ist, der angibt, wie oft sich Matrixlinien und das digitalisierte Zeichen schneiden.

**16.** Vorrichtung nach Anspruch 15, bei der das Mittel zum Vergleichen zum Vergleichen von dem digitalisierten Zeichen zugeordneten Merkmals- und Schnittcodes mit den mehreren Referenzzeichen zugeordneten Merkmals- und Schnittcodes ausgebildet ist.

**17.** Vorrichtung nach einem der Ansprüche 13 bis 16, bei der das Logik-Verfahren das Berechnen eines Wertes Sj für jedes der Referenzzeichen (Ncar) umfaßt, der gegeben ist durch:

$$Sj=SW*|S-Sj|+\mathrm{SUM}_{I=1}^{99}|fi-fij|+IW*\mathrm{SUM}_{I=1}^{32}|Ni-Nij|$$

wobei

S= Anzahl der Striche des eingegebenen Zeichens;
Sj= Anzahl der Striche des j-ten Referenzzeichens;
fi= Antwort des i-ten Merkmals auf das eingegebene Zeichen;
fij= Antwort des i-ten Merkmals auf das j-te Referenzzeichen;
Ni= Anzahl der Schnitte zwischen der i-ten Linie und dem eingegebenen Zeichen;
Nij= Anzahl der Schnitte zwischen der i-ten Linie und dem j.-ten Referenzzeichen;
SW= Strichgewichtung; und
IW= Schnittgewichtung;
und das Referenzzeichen mit dem kleinsten Wert Sj als das mit der Hand geschriebene Zeichen identifiziert wird.

**18.** Vorrichtung nach einem der Ansprüche 12 bis 17, bei der das Zeicheneingabemittel zum Eingeben des Zeichens in einen Rahmen ausgebildet ist, der einen oberen Abschnitt, einen mittleren Abschnitt und einen unteren Abschnitt aufweist.

**19.** Vorrichtung nach Anspruch 18, die darüber hinaus
Mittel umfaßt, die dem digitaliserten Zeichen Rahmencodes entsprechend der Position topologischer Merkmale des digitalisierten Zeichens relativ zum oberen, mittleren und unteren Abschnitt des Rahmens zuordnen.

**20.** Vorrichtung nach Anspruch 19, die darüber hinaus
Mittel umfaßt, die dem digitalisierten Zeichen die Rahmenzahl entsprechend den zugeordneten Rahmencodes zugeordnen.

**21.** Vorrichtung nach einem der Ansprüche 12 bis 20, die darüber hinaus eine
zur Verbindung mit einem Computer bestimmte Schnittstelle umfaßt, die so ausgebildet ist, daß erkannte mit der Hand geschriebene Zeichen dem Computer übergeben werden, wodurch dem Computer Befehle geliefert werden.

**Revendications**

**1.** Procédé pour reconnaître un caractère manuscrit, consistant à :

introduire un caractère en utilisant des moyens d'entrée de caractère, ledit caractère étant introduit dans une région définissant une grille ayant trois portions, et créer un numéro de grille indiquant le positionnement du caractère dans la grille ;
numériser le caractère et stocker le caractère numérisé ;
déduire des propriétés topologiques du caractère numérisé ;
comparer les propriétés topologiques du caractère numérisé avec les propriétés topologiques d'une pluralité de caractères de référence ayant un numéro correspondant de grille ;
déterminer quel caractère de référence dans ladite pluralité de caractères de référence a des propriétés topologiques qui correspondent aux propriétés topologiques du caractère numérisé et reconnaître ainsi le caractère manuscrit.

**2.** Procédé selon la revendication 1, dans lequel l'étape de détermination comprend d'exécuter un processus logique.

**3.** Procédé selon la revendication 1 ou la revendication 2, dans lequel l'étape de déduction comprend de déduire des propriétés topologiques du caractère numérisé sous la forme d'un ou de plusieurs codes de caractéristique, chaque code de caractéristique indiquant l'une des propriétés topologiques du caractère numérisé.

**4.** Procédé selon l'une quelconque des revendications précédentes, dans lequel l'étape de déduction comprend de déduire un code d'intersection, le code d'intersection indiquant le nombre d'intersections entre des lignes de matrice et le caractère numérisé.

**5.** Procédé selon la revendication 3, dans lequel l'étape de comparaison comprend de comparer des codes de caractéristique associés au caractère numérisé avec les codes de caractéristique associés à ladite pluralité de caractères de référence.

**6.** Procédé selon la revendication 4, dans lequel l'étape de comparaison comprend de comparer des codes de caractéristique et des codes d'intersection associés au caractère numérisé avec les codes de caractéristique et les codes d'intersection associés à ladite pluralité de caractères de référence.

**7.** Procédé selon l'une quelconque des revendications 2 à 6, dans lequel l'étape d'exécution du processus logique comprend d'évaluer une valeur Sj pour chacun des caractères de référence (Ncar), donnée par :

$$Sj = SW*|S - Sj| + \sum_{i=1}^{99} |fi - fij| + IW*\sum_{i=1}^{32} |Ni - Nij|$$

où

S = nombre de traits du caractère introduit ;
Sj = nombre de traits du j-ième caractère de référence ;
fi = réponse de la i-ième caractéristique au caractère introduit ;
fij = réponse de la i-ième caractéristique au j-ième caractère de référence ;
Ni = nombre d'intersections de la i-ième ligne avec le caractère introduit ;
Nij = nombre d'intersections de la i-ième ligne avec le j-ième caractère de référence ;
SW = poids de trait ; et
IW = poids d'intersection ;
et d'identifier le caractère de référence ayant la valeur Sj la plus faible comme étant le caractère manuscrit.

**8.** Procédé selon l'une quelconque des revendications précédentes, dans lequel l'étape d'introduction du caractère comprend d'introduire le caractère dans une grille ayant une portion supérieure, une portion centrale et une portion inférieure.

**9.** Procédé selon l'une quelconque des revendications précédentes, comprenant en outre d'affecter des codes de grille au caractère numérisé en fonction de la position des propriétés topologiques du caractère numérisé par rapport aux portions supérieure, centrale et inférieure de la grille.

**10.** Procédé selon la revendication 9, dans lequel l'étape d'introduction du caractère comprend d'introduire le caractère dans une position par rapport aux portions supérieure, centrale et inférieure de la grille en fonction de la propriété topologique du caractère.

**11.** Procédé selon la revendication 9 ou la revendication 10, comprenant en outre d'affecter le numéro de grille au caractère numérisé selon les codes de grille qui lui sont affectés.

**12.** Appareil pour reconnaître un caractère manuscrit, comprenant :

des moyens d'entrée de caractère pour introduire un caractère dans une région définissant une grille ayant trois portions, et créer un numéro de grille indiquant au moins le positionnement du caractère dans la grille ;
des moyens pour numériser le caractère ;
une mémoire pour stocker le caractère numérisé ;
des moyens de déduction pour déduire des propriétés topologiques du caractère numérisé ;
des moyens pour comparer les propriétés topologiques du caractère numérisé avec les propriétés topologiques d'une pluralité de caractères de référence ayant un numéro correspondant de grille ;
des moyens pour déterminer quel caractère de référence dans ladite pluralité de caractères de référence a des propriétés topologiques qui correspondent sensiblement aux propriétés topologiques du caractère numérisé et reconnaître ainsi le caractère manuscrit.

**13.** Appareil selon la revendication 12, dans lequel les moyens de détermination sont disposés pour exécuter un processus logique.

**14.** Appareil selon la revendication 12 ou la revendication 13, dans lequel les moyens de déduction sont disposés pour déduire des propriétés topologiques du caractère numérisé sous la forme d'un ou plusieurs codes de caractéristique, chaque code de caractéristique indiquant l'une des propriétés topologiques du caractère numérisé.

**15.** Appareil selon l'une quelconque des revendications 12 à 14, dans lequel les moyens de déduction sont disposés pour déduire un code d'intersection, le code d'intersection indiquant le nombre d'intersections entre des lignes de matrice et le caractère numérisé.

**16.** Appareil selon la revendication 15, dans lequel les moyens de comparaison sont disposés pour comparer des codes de caractéristique et des codes d'intersection avec les codes de caractéristique et les codes d'intersection associés à ladite pluralité de caractères de référence.

**17.** Appareil selon l'une quelconque des revendications 13 à 16, dans lequel le processus logique comprend d'évaluer une valeur Sj pour chacun des caractères de référence (Ncar), donnée par :

$$Sj = SW* |S - Sj| + \sum_{i=1}^{99} |fi - fij| + IW* \sum_{i=1}^{32} |Ni - Nij|$$

où

S = nombre de traits du caractère introduit ;
Sj = nombre de traits du j-ième caractère de référence ;
fi = réponse de la i-ième caractéristique au caractère introduit ;
fij = réponse de la i-ième caractéristique au j-ième caractère de référence ;
Ni = nombre d'intersections de la i-ième ligne avec le caractère introduit ;
Nij = nombre d'intersections de la i-ième ligne avec le j-ième caractère de référence ;
SW = poids de trait ; et
IW = poids d'intersection ;
et d'identifier le caractère de référence ayant la valeur Sj la plus faible comme étant le caractère manuscrit.

**18.** Appareil selon l'une quelconque des revendications 12 à 17, dans lequel les moyens d'entrée de caractère sont conçus pour introduire le caractère dans une grille ayant une portion supérieure, une portion centrale et une portion inférieure.

**19.** Appareil selon la revendication 18, comprenant en outre des moyens pour affecter des codes de grille au caractère numérisé en fonction de la position des propriétés topologiques du caractère numérisé par rapport aux portions supérieure, centrale et inférieure de la grille.

**20.** Appareil selon la revendication 18, comprenant en outre des moyens pour affecter le numéro de grille au caractère numérisé selon les codes de grille qui lui sont affectés.

**21.** Appareil selon l'une quelconque des revendication 12 à 20, comprenant en outre :
une interface conçue pour être couplée à un ordinateur, ladite interface étant disposée pour transmettre des caractères manuscrits reconnus à l'ordinateur, fournissant ainsi des instructions à l'ordinateur.

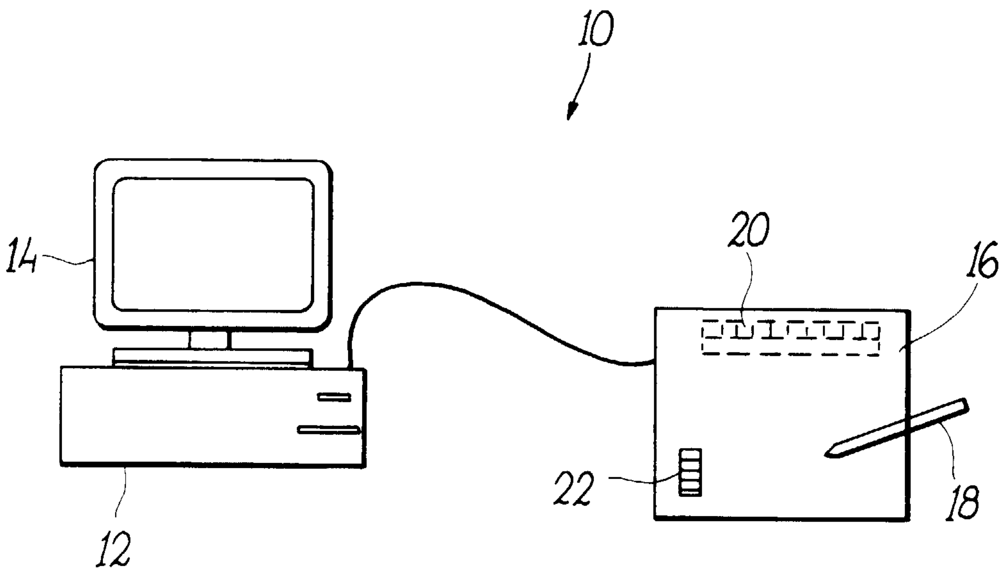


FIG. 1

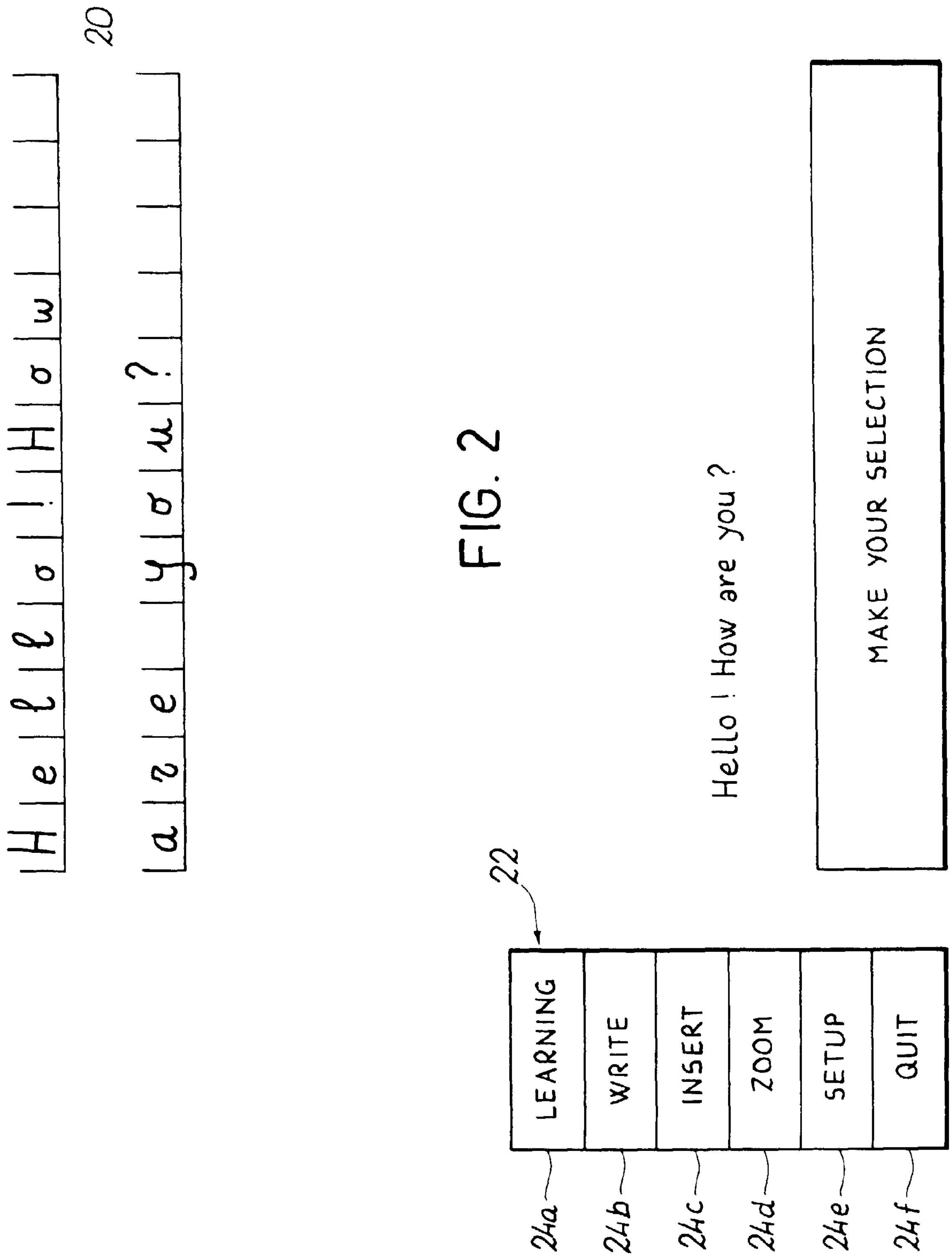
20
H e l l o ! H o w
a r e y o u ?
Hello ! How are you ?
MAKE YOUR SELECTION
22
LEARNING
WRITE
INSERT
ZOOM
SETUP
QUIT
24a
24b
24c
24d
24e
24f

FIG. 2

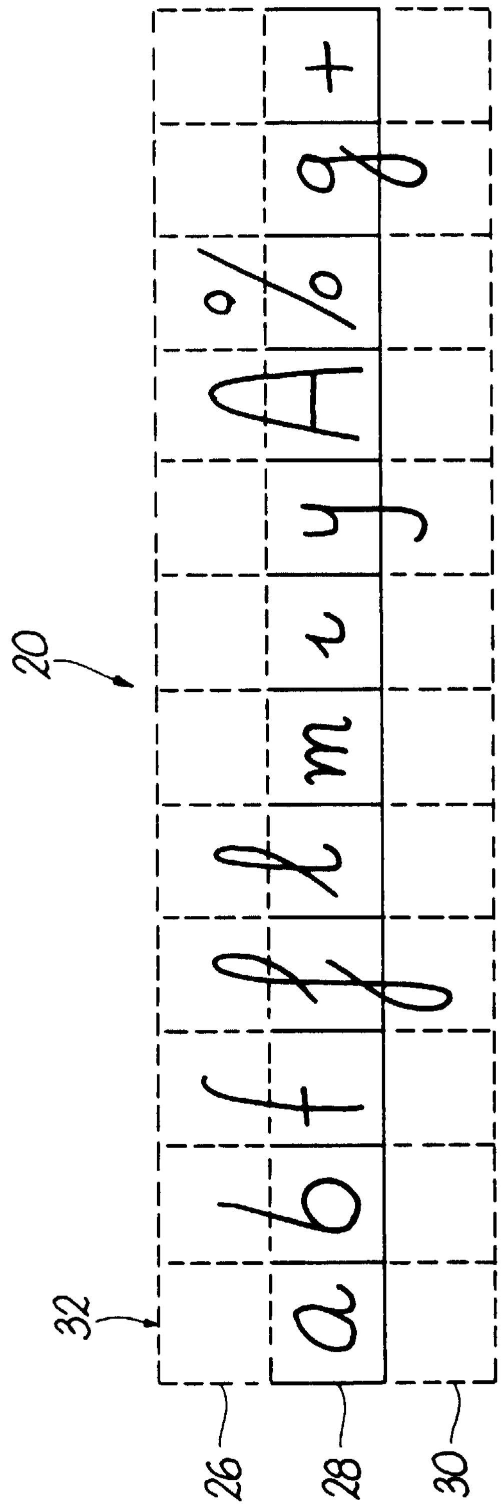


FIG. 3

```
CHAR A
  STROKES 2
  POSITION 1  BOX (179 39) (212 89)
  STROKE 1  POINTS 44
  189 71        189 72
  189 71        189 70
  189 69        189 67
  189 65        189 64
  189 62        189 61
  190 59        190 58
  191 56        191 55
  192 54        192 53
  193 52        193 51
  194 50        195 49
  196 48        197 48
  197 47        198 47
  199 48        199 49
  199 50        200 52
  200 53        200 54
  200 55        201 57
  201 58        201 59
  201 60        201 62
  201 63        201 64
  201 65        201 67
  201 68        201 69
  201 70        201 71
 STROKE 2  POINTS 10
  192 64        191 63
  192 63        193 63
  194 63        195 63
  196 63        198 62
  199 62        200 62
```

FIG. 4

```
CHAR A  STROKES 2  FRAME 3
........######..
......###....#..
.....##......##.
....##........#.
...##.........#.
..#...........##
.##............#
.#.............#
#..............#
#.........######
#...#######....#
#..............#
#..............#
#..............#
#..............#
#..............#
```

Note: '#' is logic 1 (black pixel) and
      '.' is logic 0 (white pixel).

FIG. 5

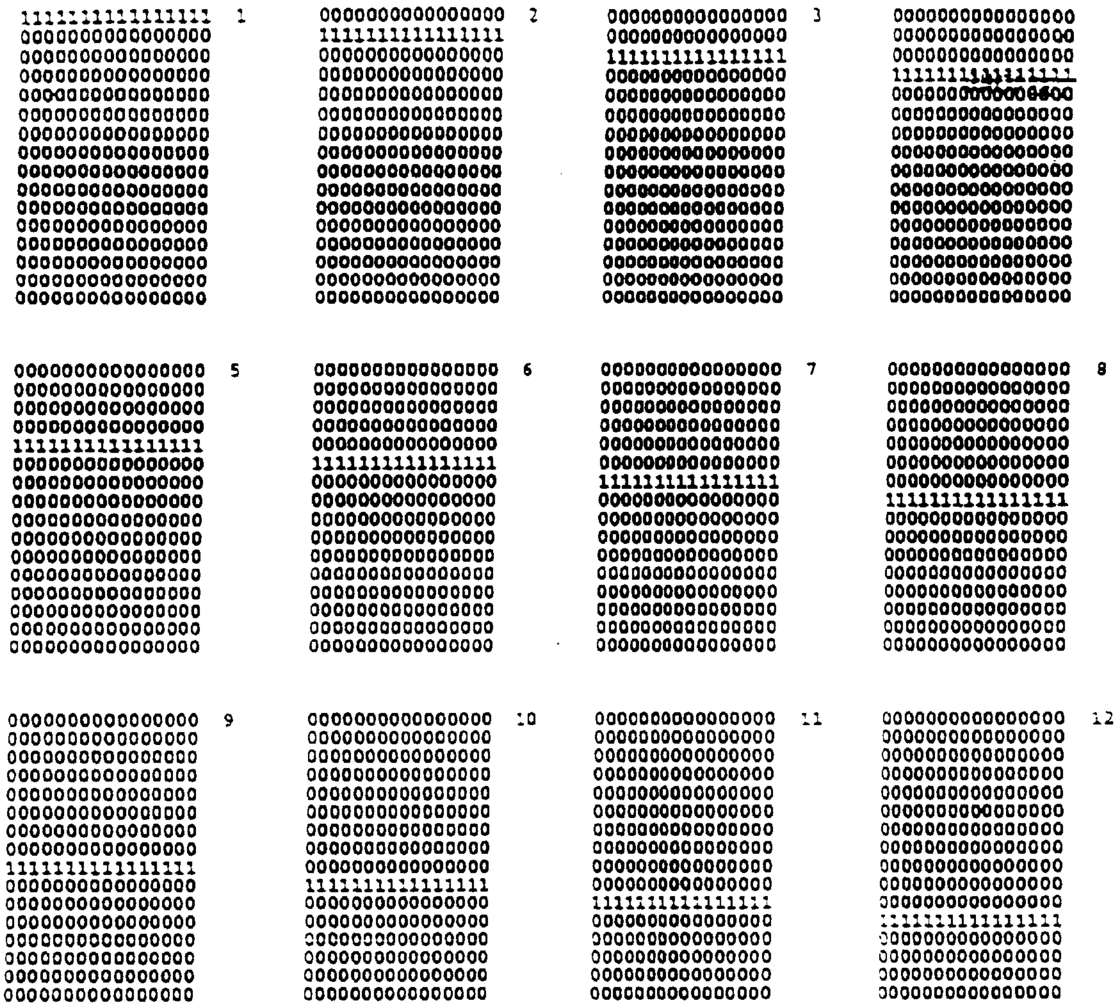

FIG. 6a

13
```
0000000000000000
0000000000000000
0000000000000000
0000000000000000
0000000000000000
0000000000000000
0000000000000000
0000000000000000
0000000000000000
0000000000000000
0000000000000000
0000000000000000
1111111111111111
0000000000000000
0000000000000000
0000000000000000
0000000000000000
0000000000000000
0000000000000000
0000000000000000
```

14
```
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
1111111111111111
0000000000000000
0000000000000000
0000000000000000
0000000000000000
0000000000000000
0000000000000000
```

15
```
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
1111111111111111
0000000000000000
0000000000000000
0000000000000000
0000000000000000
0000000000000000
```

16
```
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
1111111111111111
0000000000000000
0000000000000000
0000000000000000
0000000000000000
```

17
```
1000000000000000
1000000000000000
1000000000000000
1000000000000000
1000000000000000
1000000000000000
1000000000000000
1000000000000000
1000000000000000
1000000000000000
1000000000000000
1000000000000000
1000000000000000
1000000000000000
1000000000000000
1000000000000000
```

18
```
0100000000000000
0100000000000000
0100000000000000
0100000000000000
0100000000000000
0100000000000000
0100000000000000
0100000000000000
0100000000000000
0100000000000000
0100000000000000
0100000000000000
0100000000000000
0100000000000000
0100000000000000
0100000000000000
```

19
```
0010000000000000
0010000000000000
0010000000000000
0010000000000000
0010000000000000
0010000000000000
0010000000000000
0010000000000000
0010000000000000
0010000000000000
0010000000000000
0010000000000000
0010000000000000
0010000000000000
0010000000000000
0010000000000000
```

20
```
0001000000000000
0001000000000000
0001000000000000
0001000000000000
0001000000000000
0001000000000000
0001000000000000
0001000000000000
0001000000000000
0001000000000000
0001000000000000
0001000000000000
0001000000000000
0001000000000000
0001000000000000
0001000000000000
```

21
```
0000100000000000
0000100000000000
0000100000000000
0000100000000000
0000100000000000
0000100000000000
0000100000000000
0000100000000000
0000100000000000
0000100000000000
0000100000000000
0000100000000000
0000100000000000
0000100000000000
0000100000000000
0000100000000000
```

22
```
0000010000000000
0000010000000000
0000010000000000
0000010000000000
0000010000000000
0000010000000000
0000010000000000
0000010000000000
0000010000000000
0000010000000000
0000010000000000
0000010000000000
0000010000000000
0000010000000000
0000010000000000
0000010000000000
```

23
```
0000001000000000
0000001000000000
0000001000000000
0000001000000000
0000001000000000
0000001000000000
0000001000000000
0000001000000000
0000001000000000
0000001000000000
0000001000000000
0000001000000000
0000001000000000
0000001000000000
0000001000000000
0000001000000000
```

24
```
0000000100000000
0000000100000000
0000000100000000
0000000100000000
0000000100000000
0000000100000000
0000000100000000
0000000100000000
0000000100000000
0000000100000000
0000000100000000
0000000100000000
0000000100000000
0000000100000000
0000000100000000
0000000100000000
```

FIG. 6b

25
```
0000000010000000
0000000010000000
0000000010000000
0000000010000000
0000000010000000
0000000010000000
0000000010000000
0000000010000000
0000000010000000
0000000010000000
0000000010000000
0000000010000000
0000000010000000
0000000010000000
0000000010000000
0000000010000000
```

26
```
0000000001000000
0000000001000000
0000000001000000
0000000001000000
0000000001000000
0000000001000000
0000000001000000
0000000001000000
0000000001000000
0000000001000000
0000000001000000
0000000001000000
0000000001000000
0000000001000000
0000000001000000
0000000001000000
```

27
```
0000000000100000
0000000000100000
0000000000100000
0000000000100000
0000000000100000
0000000000100000
0000000000100000
0000000000100000
0000000000100000
0000000000100000
0000000000100000
0000000000100000
0000000000100000
0000000000100000
0000000000100000
0000000000100000
```

28
```
0000000000001000
0000000000001000
0000000000001000
0000000000001000
0000000000001000
0000000000001000
0000000000001000
0000000000001000
0000000000001000
0000000000001000
0000000000001000
0000000000001000
0000000000001000
0000000000001000
0000000000001000
0000000000001000
```

29
```
0000000000000010
0000000000000010
0000000000000010
0000000000000010
0000000000000010
0000000000000010
0000000000000010
0000000000000010
0000000000000010
0000000000000010
0000000000000010
0000000000000010
0000000000000010
0000000000000010
0000000000000010
0000000000000010
```

30
```
0000000000000001
0000000000000001
0000000000000001
0000000000000001
0000000000000001
0000000000000001
0000000000000001
0000000000000001
0000000000000001
0000000000000001
0000000000000001
0000000000000001
0000000000000001
0000000000000001
0000000000000001
0000000000000001
```

31
```
1111111100000000
1111111100000000
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
```

32
```
0000000000000000
0000000000000000
1111111100000000
1111111100000000
0000000000000000
0000000000000000
0000000000000000
0000000000000000
0000000000000000
0000000000000000
0000000000000000
0000000000000000
0000000000000000
0000000000000000
0000000000000000
0000000000000000
```

33
```
0000000000000000
0000000000000000
0000000000000000
0000000000000000
1111111100000000
1111111100000000
0000000000000000
0000000000000000
0000000000000000
0000000000000000
0000000000000000
0000000000000000
0000000000000000
0000000000000000
0000000000000000
0000000000000000
```

34
```
0000000000000000
0000000000000000
0000000000000000
0000000000000000
0000000000000000
0000000000000000
1111111100000000
1111111100000000
0000000000000000
0000000000000000
0000000000000000
0000000000000000
0000000000000000
0000000000000000
0000000000000000
0000000000000000
```

35
```
0000000000000000
0000000000000000
0000000000000000
0000000000000000
0000000000000000
0000000000000000
0000000000000000
0000000000000000
1111111100000000
1111111100000000
0000000000000000
0000000000000000
0000000000000000
0000000000000000
0000000000000000
0000000000000000
```

36
```
0000000000000000
0000000000000000
0000000000000000
0000000000000000
0000000000000000
0000000000000000
0000000000000000
0000000000000000
0000000000000000
0000000000000000
1111111100000000
1111111100000000
0000000000000000
0000000000000000
0000000000000000
0000000000000000
```

FIG. 6c

37
```
0000000000000000
0000000000000000
0000000000000000
0000000000000000
0000000000000000
0000000000000000
0000000000000000
0000000000000000
0000000000000000
0000000000000000
0000000000000000
0000000000000000
1111111100000000
1111111100000000
0000000000000000
0000000000000000
```

38
```
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
1111111100000000
1111111100000000
```

39
```
0000000011111111
0000000011111111
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
0000000000000000
```

40
```
0000000000000000
0000000000000000
0000000011111111
0000000011111111
0000000000000000
0000000000000000
0000000000000000
0000000000000000
0000000000000000
0000000000000000
0000000000000000
0000000000000000
0000000000000000
0000000000000000
0000000000000000
0000000000000000
```

41
```
0000000000000000
0000000000000000
0000000000000000
0000000000000000
0000000011111111
0000000011111111
0000000000000000
0000000000000000
0000000000000000
0000000000000000
0000000000000000
0000000000000000
0000000000000000
0000000000000000
0000000000000000
0000000000000000
```

42
```
0000000000000000
0000000000000000
0000000000000000
0000000000000000
0000000000000000
0000000000000000
0000000000000000
0000000000000000
0000000011111111
0000000011111111
0000000000000000
0000000000000000
0000000000000000
0000000000000000
0000000000000000
0000000000000000
```

43
```
0000000000000000
0000000000000000
0000000000000000
0000000000000000
0000000000000000
0000000000000000
0000000000000000
0000000000000000
0000000000000000
0000000000000000
0000000000000000
0000000000000000
0000000011111111
0000000011111111
0000000000000000
0000000000000000
```

44
```
1100000000000000
1100000000000000
1100000000000000
1100000000000000
1100000000000000
1100000000000000
1100000000000000
1100000000000000
0000000000000000
0000000000000000
0000000000000000
0000000000000000
0000000000000000
0000000000000000
0000000000000000
0000000000000000
```

45
```
0000001100000000
0000001100000000
0000001100000000
0000001100000000
0000001100000000
0000001100000000
0000001100000000
0000001100000000
0000000000000000
0000000000000000
0000000000000000
0000000000000000
0000000000000000
0000000000000000
0000000000000000
0000000000000000
```

46
```
0000000000001100
0000000000001100
0000000000001100
0000000000001100
0000000000001100
0000000000001100
0000000000001100
0000000000001100
0000000000000000
0000000000000000
0000000000000000
0000000000000000
0000000000000000
0000000000000000
0000000000000000
0000000000000000
```

47
```
0000000000000011
0000000000000011
0000000000000011
0000000000000011
0000000000000011
0000000000000011
0000000000000011
0000000000000011
0000000000000000
0000000000000000
0000000000000000
0000000000000000
0000000000000000
0000000000000000
0000000000000000
0000000000000000
```

48
```
0000000000000000
0000000000000000
0000000000000000
0000000000000000
0000000000000000
0000000000000000
0000000000000000
0000000000000000
1100000000000000
1100000000000000
1100000000000000
1100000000000000
1100000000000000
1100000000000000
1100000000000000
1100000000000000
```

FIG. 6d

49
```
0000000000000000
0000000000000000
0000000000000000
0000000000000000
0000000000000000
0000000000000000
0000000000000000
0000000000000000
0000000000001100
0000000000001100
0000000000001100
0000000000001100
0000000000001100
0000000000001100
0000000000001100
0000000000001100
```

50
```
1111000000000000
1111000000000000
1111000000000000
1111000000000000
0000000000000000
0000000000000000
0000000000000000
0000000000000000
0000000000000000
0000000000000000
0000000000000000
0000000000000000
0000000000000000
0000000000000000
0000000000000000
0000000000000000
```

51
```
0000000000000000
0000000000000000
0000000000000000
0000000000000000
1111000000000000
1111000000000000
1111000000000000
1111000000000000
1111000000000000
0000000000000000
0000000000000000
0000000000000000
0000000000000000
0000000000000000
0000000000000000
0000000000000000
```

52
```
0000111100000000
0000111100000000
0000111100000000
0000111100000000
0000000000000000
0000000000000000
0000000000000000
0000000000000000
0000000000000000
0000000000000000
0000000000000000
0000000000000000
0000000000000000
0000000000000000
0000000000000000
0000000000000000
```

53
```
0000000000000000
0000000000000000
0000000000000000
0000000000000000
0000000000000000
0000000000000000
0000000000000000
0000000000000000
0000000000000000
0000000000000000
0000000000000000
0000000000000000
0000111100000000
0000111100000000
0000111100000000
0000111100000000
```

54
```
0000000011110000
0000000011110000
0000000011110000
0000000011110000
0000000000000000
0000000000000000
0000000000000000
0000000000000000
0000000000000000
0000000000000000
0000000000000000
0000000000000000
0000000000000000
0000000000000000
0000000000000000
0000000000000000
```

55
```
0000000000000000
0000000000000000
0000000000000000
0000000000000000
0000000011110000
0000000011110000
0000000011110000
0000000011110000
0000000000000000
0000000000000000
0000000000000000
0000000000000000
0000000000000000
0000000000000000
0000000000000000
0000000000000000
```

56
```
0000000000000000
0000000000000000
0000000000000000
0000000000000000
0000000000000000
0000000000000000
0000000000000000
0000000000000000
0000000011110000
0000000011110000
0000000011110000
0000000011110000
0000000000000000
0000000000000000
0000000000000000
0000000000000000
```

57
```
0000000000000000
0000000000000000
0000000000000000
0000000000000000
0000000000000000
0000000000000000
0000000000000000
0000000000000000
0000000000000000
0000000000000000
0000000000000000
0000000000000000
0000000011110000
0000000011110000
0000000011110000
0000000011110000
```

58
```
0000000000000000
0000000000000000
0000000000000000
0000000000000000
0000000000001111
0000000000001111
0000000000001111
0000000000001111
0000000000000000
0000000000000000
0000000000000000
0000000000000000
0000000000000000
0000000000000000
0000000000000000
0000000000000000
```

59
```
0000000000000000
0000000000000000
0000000000000000
0000000000000000
0000000000000000
0000000000000000
0000000000000000
0000000000000000
0000000000001111
0000000000001111
0000000000001111
0000000000001111
0000000000000000
0000000000000000
0000000000000000
0000000000000000
```

60
```
0000000000000110
0000000000001000
0000000000010000
0000000000100000
0000000001000000
0000000010000000
0000000100000000
0000001000000000
0000010000000000
0000100000000000
0001000000000000
0010000000000000
0100000000000000
1000000000000000
1000000000000000
0000000000000000
```

FIG. 6e

```
0000000000001000 61
0000000000010000
0000000000100000
0000000001000000
0000000010000000
0000000100000000
0000001000000000
0000010000000000
0000100000000000
0001000000000000
0010000000000000
1100000000000000
1100000000000000
1000000000000000
0000000000000000
0000000000000000
```

```
0000000000010000 62
0000000000100000
0000000001000000
0000000010000000
0000000100000000
0000001000000000
0000110000000000
0001100000000000
0011000000000000
0110000000000000
1100000000000000
0000000000000000
0000000000000000
0000000000000000
0000000000000000
0000000000000000
```

```
0000000001100000 63
0000000011000000
0000000110000000
0000001100000000
0000011000000000
0000110000000000
0001000000000000
0010000000000000
0100000000000000
1000000000000000
0000000000000000
0000000000000000
0000000000000000
0000000000000000
0000000000000000
0000000000000000
```

```
0000000110000000 64
0000001100000000
0000011000000000
0000110000000000
0001100000000000
0011000000000000
0110000000000000
0100000000000000
1000000000000000
0000000000000000
0000000000000000
0000000000000000
0000000000000000
0000000000000000
0000000000000000
0000000000000000
```

```
0001110000000000 65
0111100000000000
0111000000000000
1110000000000000
1100000000000000
1000000000000000
0000000000000000
0000000000000000
0000000000000000
0000000000000000
0000000000000000
0000000000000000
0000000000000000
0000000000000000
0000000000000000
0000000000000000
```

```
0000000000000001 66
0000000000000001
0000000000000010
0000000000000100
0000000000001000
0000000000010000
0000000000100000
0000000001000000
0000000010000000
0000000100000000
0000001000000000
0000010000000000
0000100000000000
0001000000000000
0010000000000000
0100000000000000
```

```
0000000000000000 67
0000000000000000
0000000000000001
0000000000000010
0000000000000100
0000000000001000
0000000000010000
0000000000100000
0000000001000000
0000000010000000
0000000100000000
0000001000000000
0000010000000000
0000100000000000
0001100000000000
0011000000000000
```

```
0000000000000000 68
0000000000000000
0000000000000000
0000000000000000
0000000000000001
0000000000000011
0000000000000110
0000000000001100
0000000000011000
0000000000010000
0000000000100000
0000000001000000
0000000010000000
0000000100000000
0000001000000000
0000010000000000
```

```
0000000000000000 69
0000000000000000
0000000000000000
0000000000000000
0000000000000000
0000000000000000
0000000000000001
0000000000000010
0000000000000100
0000000000001000
0000000000011000
0000000000110000
0000000001100000
0000000011000000
0000000110000000
0000001100000000
```

```
0000000000000000 70
0000000000000000
0000000000000000
0000000000000000
0000000000000000
0000000000000000
0000000000000000
0000000000000001
0000000000000010
0000000000000110
0000000000000110
0000000000001100
0000000000011000
0000000000110000
0000000001100000
0000000011000000
```

```
0000000000000000 71
0000000000000000
0000000000000000
0000000000000000
0000000000000000
0000000000000000
0000000000000000
0000000000000000
0000000000000001
0000000000000001
0000000000000001
0000000000000011
0000000000000110
0000000000001110
0000000000011100
0000000000111000
```

```
1000000000000000 72
0100000000000000
0010000000000000
0001000000000000
0000100000000000
0000010000000000
0000001000000000
0000000100000000
0000000010000000
0000000001000000
0000000000100000
0000000000010000
0000000000001000
0000000000000100
0000000000000010
0000000000000001
```

FIG. 6f

73
```
0110000000000000
0001000000000000
0000100000000000
0000010000000000
0000001000000000
0000000100000000
0000000010000000
0000000001000000
0000000000100000
0000000000010000
0000000000001000
0000000000000100
0000000000000010
0000000000000001
0000000000000001
0000000000000000
```

74
```
0000000011100000
0000000000110000
0000000000011000
0000000000001100
0000000000000100
0000000000000111
0000000000000011
0000000000000001
0000000000000000
0000000000000000
0000000000000000
0000000000000000
0000000000000000
0000000000000000
0000000000000000
0000000000000000
```

75
```
0000000000000000
0000000000000000
0000000000000000
0000000000000000
0000000000000000
0000000000000000
0000000000000000
0000000000000000
1000000000000000
1100000000000000
1110000000000000
0010000000000000
0011000000000000
0001100000000000
0000110000000000
0000011100000000
```

76
```
0000000000000000
0000000000000000
0000000000000000
0000000000000000
000000000[illegible]
0000000000000000
0000000000000000
0000000000000000
0000111100000000
0000011100000000
0000011100000000
0000001100000000
0000001100000000
0000000100000000
0000000100000000
0000000000000000
```

77
```
0000000000000000
0000000000000000
0000000000000000
0000000000000000
0000000000000000
0000000000000000
0000000000000000
0000000000000000
0000000000000001
0000000000000011
0000000000000111
0000000000000110
0000000000001100
0000000000011000
0000000000110000
0000000001100000
```

78
```
0000000000000000
0000000000000000
0000000000000000
0000000000000000
0000000000000000
0000000000000000
0000000000000000
0000000000000000
0000000000001110
0000000000011100
0000000000011000
0000000000111000
0000000000110000
0000000001100000
0000000001000000
0000000000000000
```

79
```
1000000000000000
1000000000000000
0100000000000000
0100000000000000
0010000000000000
0010000000000000
0001000000000000
0001000000000000
0000100000000000
0000100000000000
0000010000000000
0000010000000000
0000001000000000
0000001000000000
0000000100000000
0000000100000000
```

80
```
0000000000000001
0000000000000001
0000000000000010
0000000000000010
0000000000000100
0000000000000100
0000000000001000
0000000000001000
0000000000010000
0000000000010000
0000000000100000
0000000000100000
0000000001000000
0000000001000000
0000000010000000
0000000100000000
```

81
```
0000000110000000
0000001001000000
0000010000100000
0000100000010000
0001000000001000
0010000000000100
0100000000000010
1000000000000001
0000000000000000
0000000000000000
0000000000000000
0000000000000000
0000000000000000
0000000000000000
0000000000000000
0000000000000000
```

82
```
0000000000000000
0000000000000000
0000000000000000
0000000000000000
0000000000000000
0000000000000000
0000000000000000
0000000000000000
1000000000000001
0100000000000010
0010000000000100
0001000000001000
0000100000010000
0000010000100000
0000001001000000
0000000110000000
```

83
```
0000000100000000
0000001000000000
0000010000000000
0000100000000000
0001000000000000
0010000000000000
0100000000000000
1000000000000000
1000000000000000
0100000000000000
0010000000000000
0001000000000000
0000100000000000
0000010000000000
0000001000000000
0000000100000000
```

84
```
0000000000000001
0000000000000010
0000000000000100
0000000000001000
0000000000010000
0000000000100000
0000000001000000
0000000010000000
0000000010000000
0000000001000000
0000000000100000
0000000000010000
0000000000001000
0000000000000100
0000000000000010
0000000000000001
```

FIG. 6g

```
1000000000000000   85
0100000000000000
0010000000000000
0001000000000000
0000100000000000
0000010000000000
0000001000000000
0000000100000000
0000000100000000
0000001000000000
0000010000000000
0000100000000000
0001000000000000
0010000000000000
0100000000000000
1000000000000000
```

```
0000000000000000   86
0000000000000000
0000000000000000
0000000000000000
0000000000000000
0000000000000000
0000000000000000
0000000000000000
0000000000000011
0000000000000110
0000000000001100
0000000000011000
0000000000110000
0000000001100000
0000000011000000
0000000110000000
```

```
0000000000000000   87
0000000000000000
0000000000000000
0000000000000000
0000000000000000
0000000000000000
0000000000000000
0000000000000000
1100000000000000
0110000000000000
0011000000000000
0001100000000000
0000110000000000
0000011000000000
0000001100000000
0000000110000000
```

```
0000000000000000   88
0000000000000000
0000000000000000
0000000000000000
0000000000000000
0000000000000000
0000000000000000
0000000000000011
0000000000000110
0000000000001100
0000000000011000
0000000000110000
0000000001100000
0000000011000000
0000000110000000
0000001100000000
```

```
0000000000000000   89
0000000000000000
0000000000000000
0000000000000000
0000000000000000
0000000000000000
0000000000000000
0000000000000000
1100000000000000
0110000000000000
0011000000000000
0001100000000000
0000110000000000
0000011000000000
0000001100000000
0000000110000000
```

```
0000000000000000   90
0000000000000000
0000000000000000
0000000000000000
0000000000000000
0000000000000000
0000000000000000
0000000000000000
1100000000000000
0110000000000000
0011000000000000
0001100000000000
0000110000000000
0000011000000000
0000001100000000
0000000110000000
```

```
1100000000000000   91
0110000000000000
0011000000000000
0001100000000000
0000110000000000
0000011000000000
0000001100000000
0000000110000000
0000000000000000
0000000000000000
0000000000000000
0000000000000000
0000000000000000
0000000000000000
0000000000000000
0000000000000000
```

```
0000000000000000   92
0000000000000000
0000000000000000
0000000000000000
0000000000000000
0000000000000000
0000000000000000
0000000000000000
0000000110000000
0000000011000000
0000000001100000
0000000000110000
0000000000011000
0000000000001100
0000000000000110
0000000000000011
```

```
0000000000000000   93
0000000000000000
0000000000000000
0000000000000000
0000000000000000
0000000000000000
0000000000000000
0000000000000000
0000000110000000
0000001100000000
0000011000000000
0000110000000000
0001100000000000
0011000000000000
0110000000000000
1100000000000000
```

```
0000000000000011   94
0000000000000110
0000000000001100
0000000000011000
0000000000110000
0000000001100000
0000000011000000
0000000110000000
0000000000000000
0000000000000000
0000000000000000
0000000000000000
0000000000000000
0000000000000000
0000000000000000
0000000000000000
```

```
0000000000000000   95
0000000000000000
0000000000000000
0000000000000000
0000000000000000
0000000000000000
0000000000000000
0000000000000000
0000000000000000
0000000000000000
0000000000000000
0000000000000000
0000000000000000
1000000000000001
0100000000000010
0011111111111100
```

```
0000000000000000   96
0000000000000000
0000000000000000
0000000000000000
0000000000000000
0000000000000000
0000000000000000
0000000000000000
0000000000000000
0000000000000000
0000000000000000
0000000000000000
1000000000000001
0100000000000010
0010000000000100
0001111111111000
```

```
0000000000000000   97
0000000000000000
0000000000000000
0000000000000000
0000000000000000
0000000000000000
0000000000000000
0000000000000000
0000000000000000
0000000000000000
0000000000000000
0000000000000000
1000000000000001
0100000000000010
0010000000000100
0001000000001000
0000111111110000
```

```
0000000000000000   98
0000000000000000
0000000000000000
0000000000000000
0000000000000000
0000000000000000
0000000000000000
0000000000000000
0000000000000000
0000000000000000
0000000000000000
0000000000000000
0000000000000000
1111000000000000
0000111100000000
0000000011110000
0000000000001111
```

```
0000000000011111   99
0000000000001111
0000000000000111
0000000000000011
0000000000000011
0000000000000000
0000000000000000
0000000000000000
0000000000000000
0000000000000000
0000000000000000
0000000000000000
0000000000000000
0000000000000000
0000000000000000
0000000000000000
0000000000000000
```

FIG. 6h

```
Original Pattern        Feature Patterns    Logic 1's
                                            in common

                        ################
                        ................
                        ................
                        ................
                        ................
                        ................
                        ................
                        ................      6
                        ................
                        ................
                        ................
                        ................
                        ................
                        ................
                        ................
                        ................


........######..        ...........#....
......###....#..        ...........#....
.....##......##.        ...........#....
....##........#.        ...........#....        Threshold      Feature
...##.........#.        ...........#....        values         extraction
..#...........##        ...........#....                       code
.##............#        ...........#....
.#.............#        ...........#....      2       2, 3, 6        313....
#..............#        ...........#....
#.........######        ...........#....
#...#######....#        ...........#....
#..............#        ...........#....
#..............#        ...........#....
#..............#        ...........#....
#..............#        ...........#....
#..............#        ...........#....


                        ................
                        ................
                        ................
                        ................
                        ................
                        ................
                        ................
                        ................      5
                        ..............##
                        ............##..
                        ..........##....
                        ........##......
                        ......##........
                        ....##..........
                        ..##............
                        ##..............
```

FIG. 7

Note: '#' is logic 1 (black pixel) and '.' is logic 0 (white pixel).

```
........######..      1
......###....#..      2
.....##......##.      2
....##........#.      2
...##.........#.      2
..#...........##      2
.##............#      2
.#.............#      2    X-intersections
#..............#      2
#.........######      2
#...#######....#      3
#..............#      2
#..............#      2
#..............#      2
#..............#      2
#..............#      2

1111222222222221

Y-intersections
```

Intersection code(X-code + Y-code): 12222222223222221111222222222221

Note: '#' is logic 1 (black pixel) and '.' is logic 0 (white pixel).

FIG. 8

FIG. 9

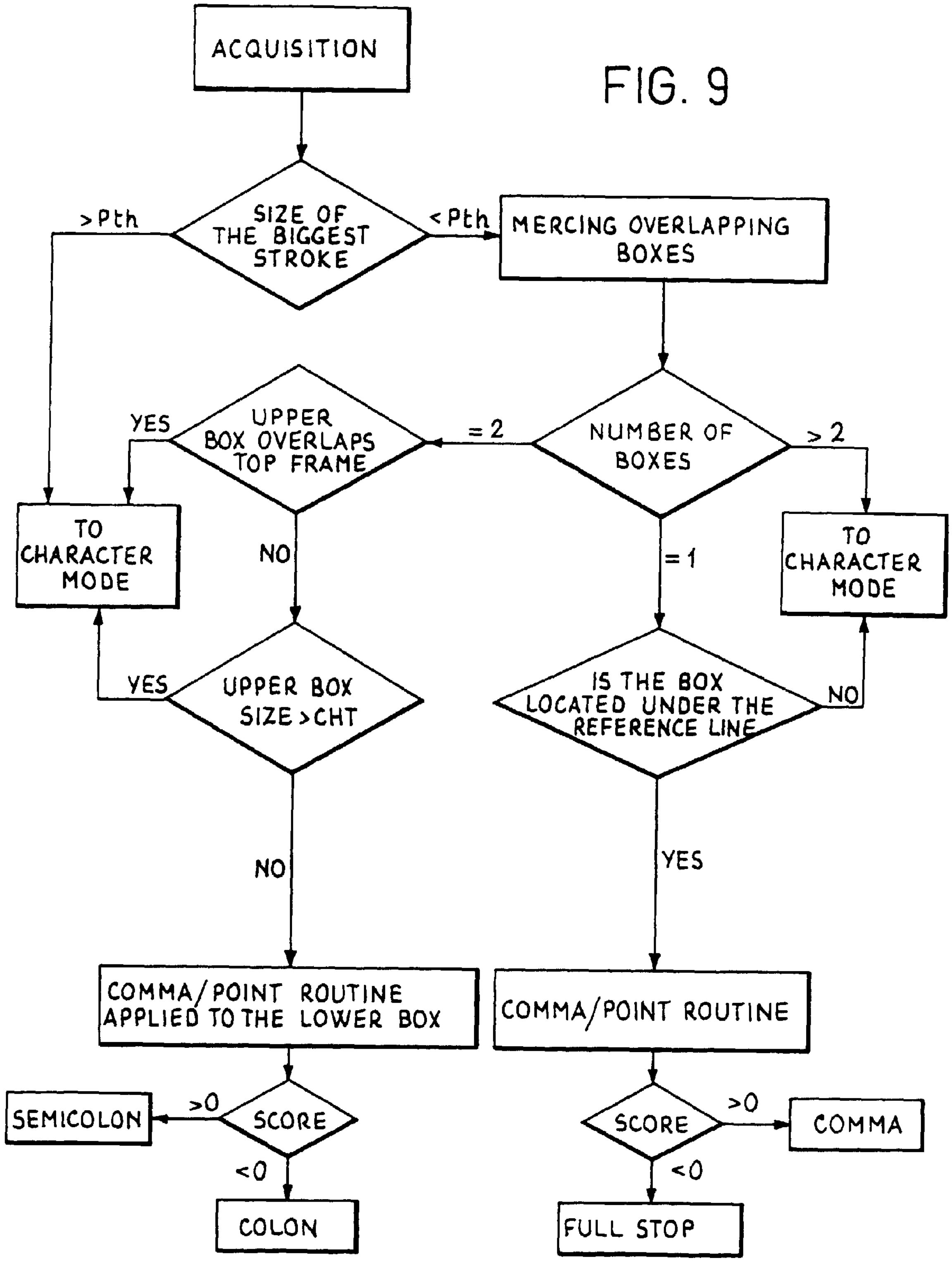
ACQUISITION
SIZE OF THE BIGGEST STROKE
>Pth
<Pth
MERGING OVERLAPPING BOXES
NUMBER OF BOXES
= 2
> 2
= 1
UPPER BOX OVERLAPS TOP FRAME
YES
NO
TO CHARACTER MODE
TO CHARACTER MODE
UPPER BOX SIZE >CHT
YES
NO
IS THE BOX LOCATED UNDER THE REFERENCE LINE
NO
YES
COMMA/POINT ROUTINE APPLIED TO THE LOWER BOX
COMMA/POINT ROUTINE
SCORE
>0
<0
SEMICOLON
COLON
SCORE
>0
<0
COMMA
FULL STOP

FIG. 10

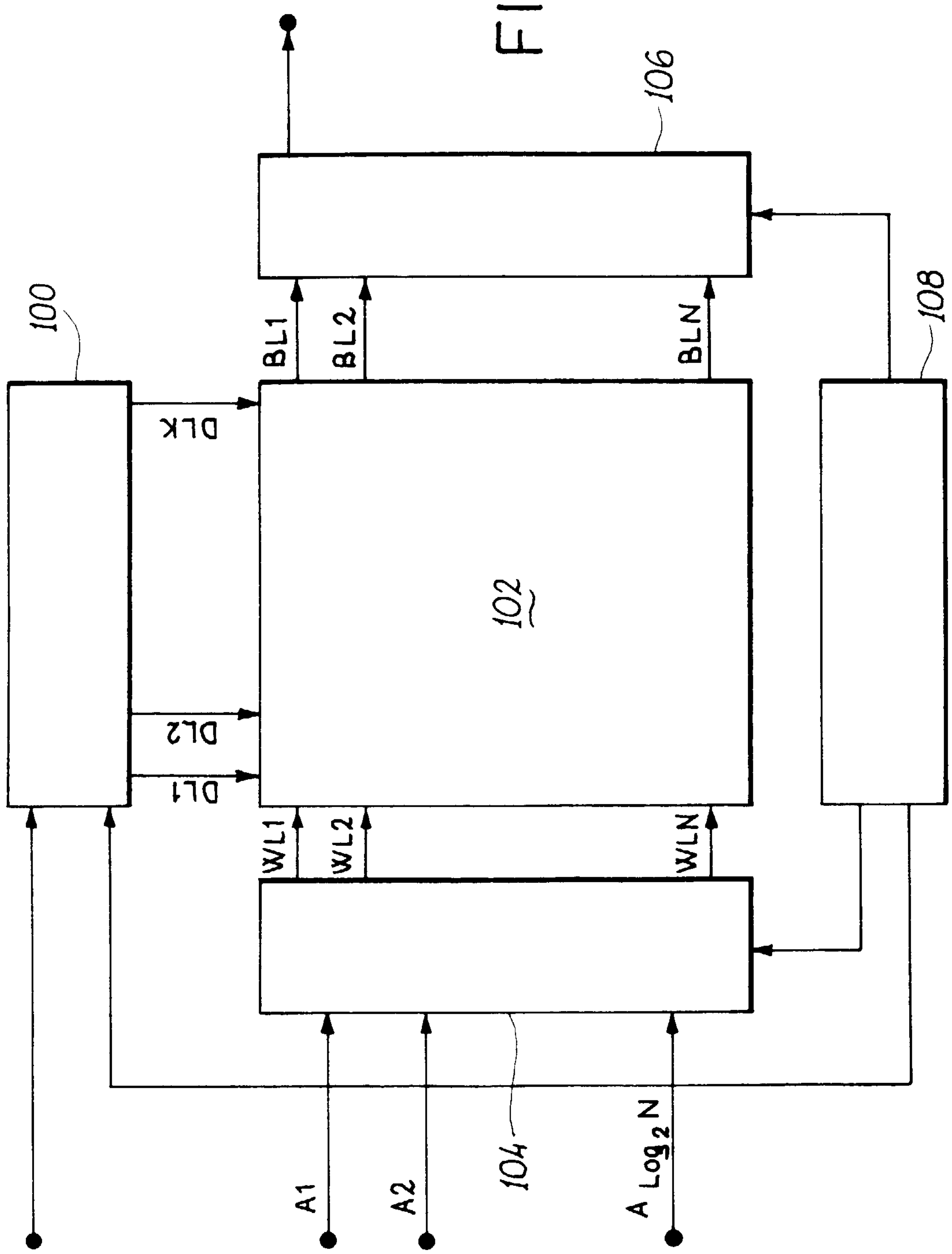
100
102
104
106
108
DLK
DL2
DL1
BL1
BL2
BLN
WL1
WL2
WLN
A1
A2
A Log2 N

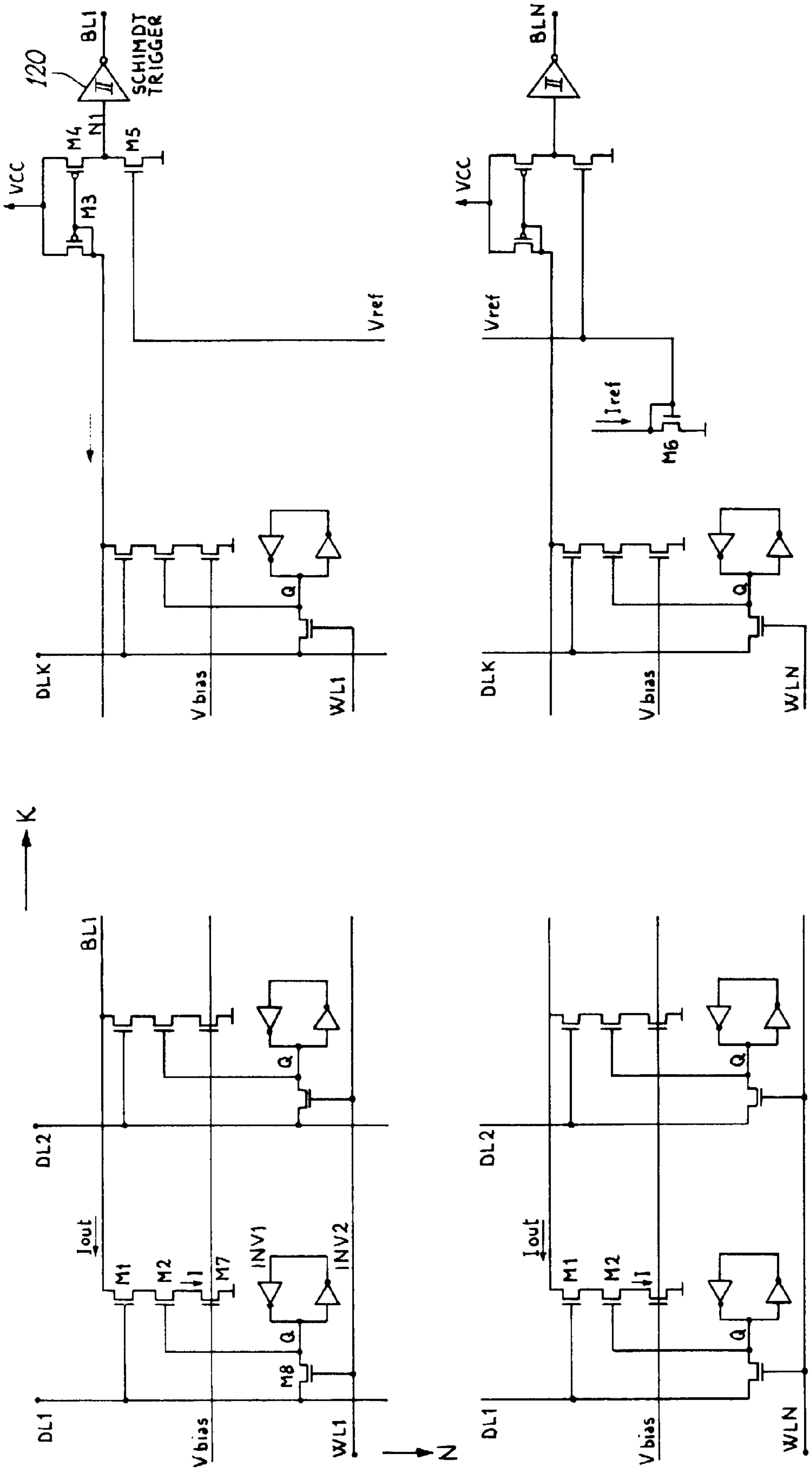
120
SCHIMDT TRIGGER
BL1
N1
M4
M5
M3
VCC
Vref
DLK
Vbias
WL1
Q
BLN
Iref
M6
WLN
K
N
DL1
DL2
Iout
M1
M2
M7
M8
I
INV1
INV2

FIG. 11

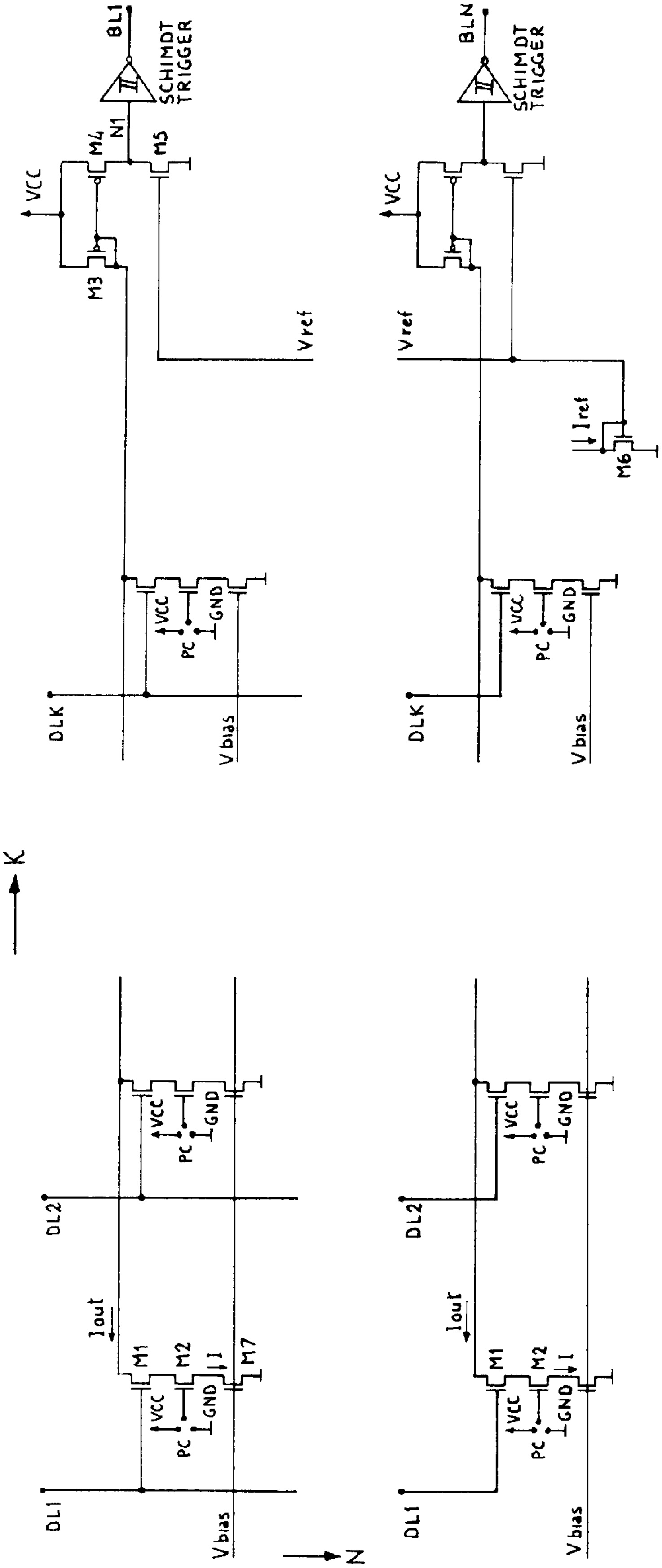
BL1
SCHIMDT TRIGGER
N1
M4
M5
VCC
M3
Vref
DLK
PC
GND
Vbias
BLN
SCHIMDT TRIGGER
VCC
Vref
Iref
M6
DLK
PC
GND
Vbias
K
DL2
Iout
M1
M2
I
M7
DL1
Vbias
N
DL2
Iout
M1
M2
I
DL1
Vbias

FIG. 12

FIG. 13

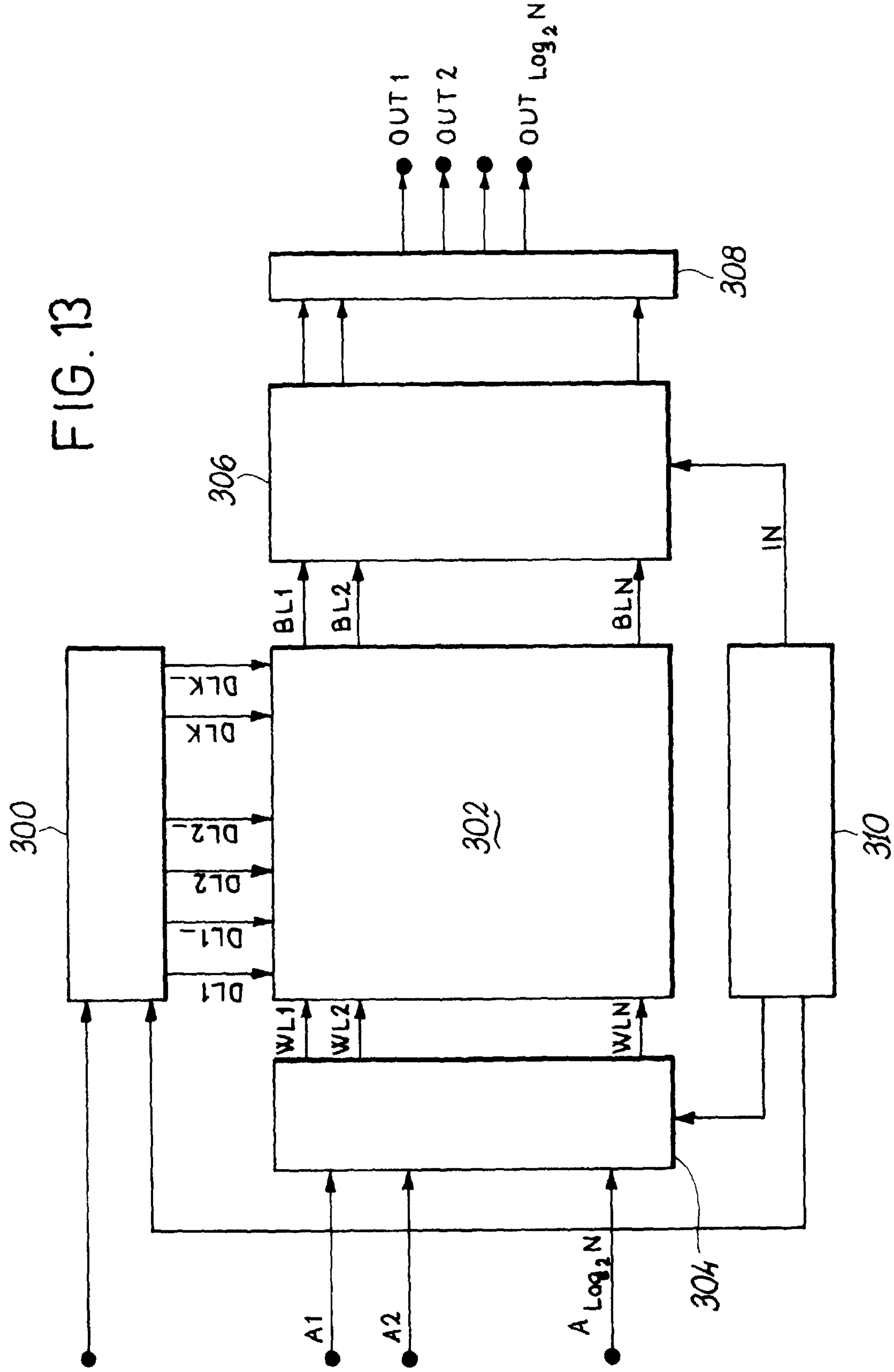
300
302
304
306
308
310
DL1
DL1_
DL2
DL2_
DLK
DLK_
WL1
WL2
WLN
BL1
BL2
BLN
IN
A1
A2
A Log2 N
OUT 1
OUT 2
OUT Log2 N

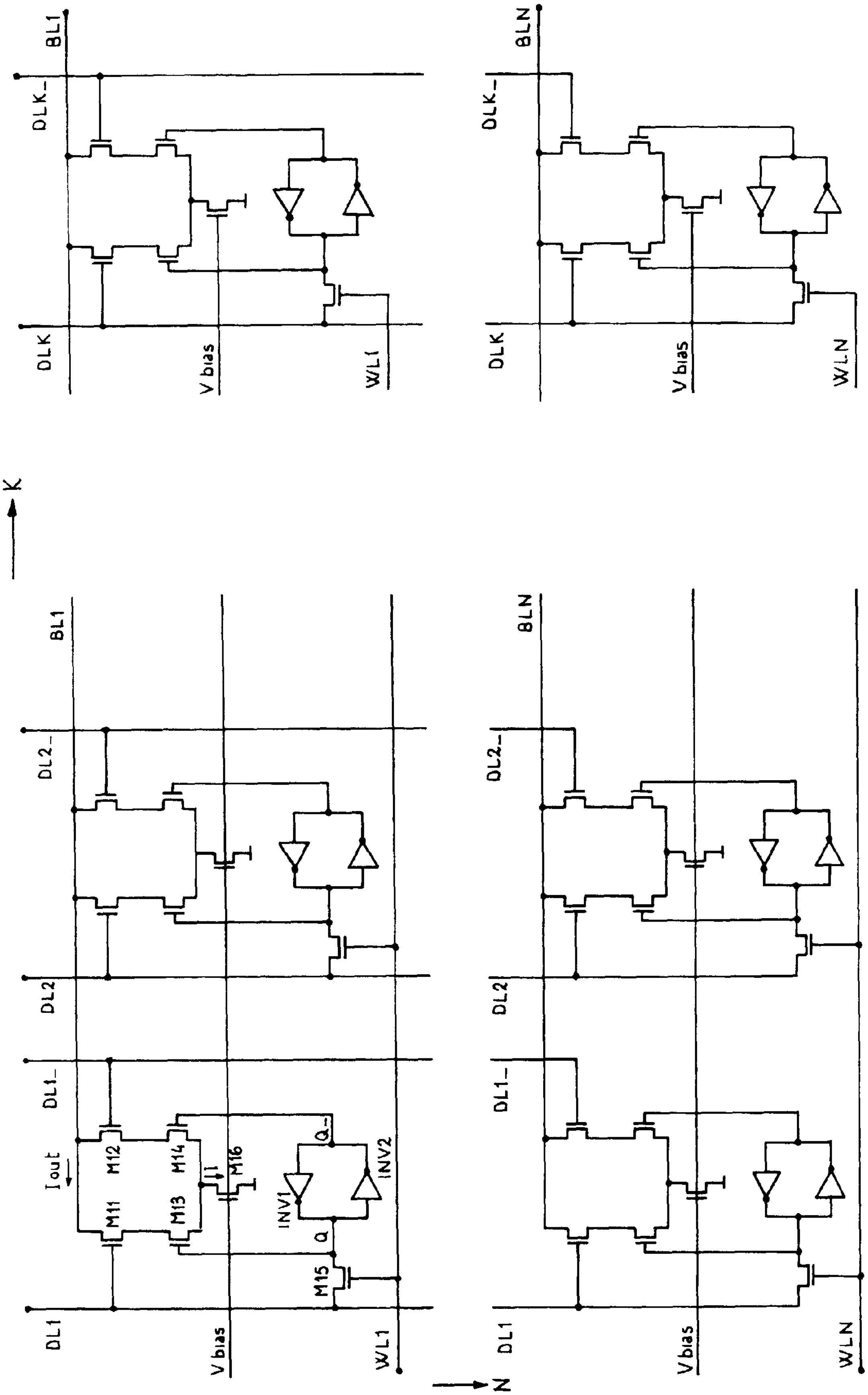
BL1
DLK_
DLK
V bias
WL1
BLN
DL2_
DL2
DL1_
DL1
WLN
Iout
M11
M12
M13
M14
M15
M16
I1
INV1
INV2
Q
Q_
K
N

FIG. 14

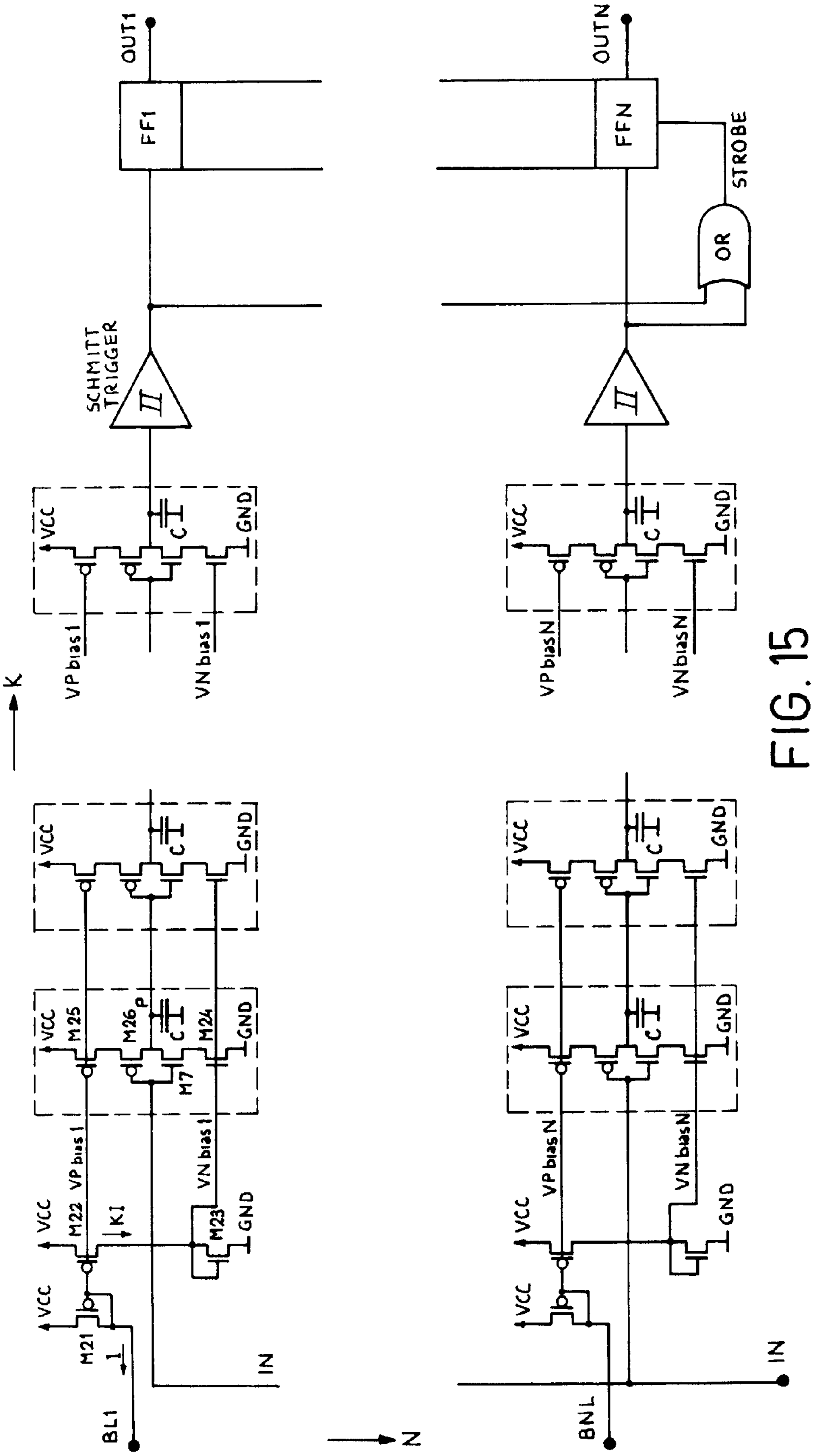
OUT1
OUTN
FF1
FFN
STROBE
OR
SCHMITT TRIGGER
VCC
GND
C
VP bias 1
VN bias 1
VP bias N
VN bias N
M21
M22
M23
M24
M25
M26
M7
P
KI
I
BL1
BNL
IN
K
N

FIG. 15

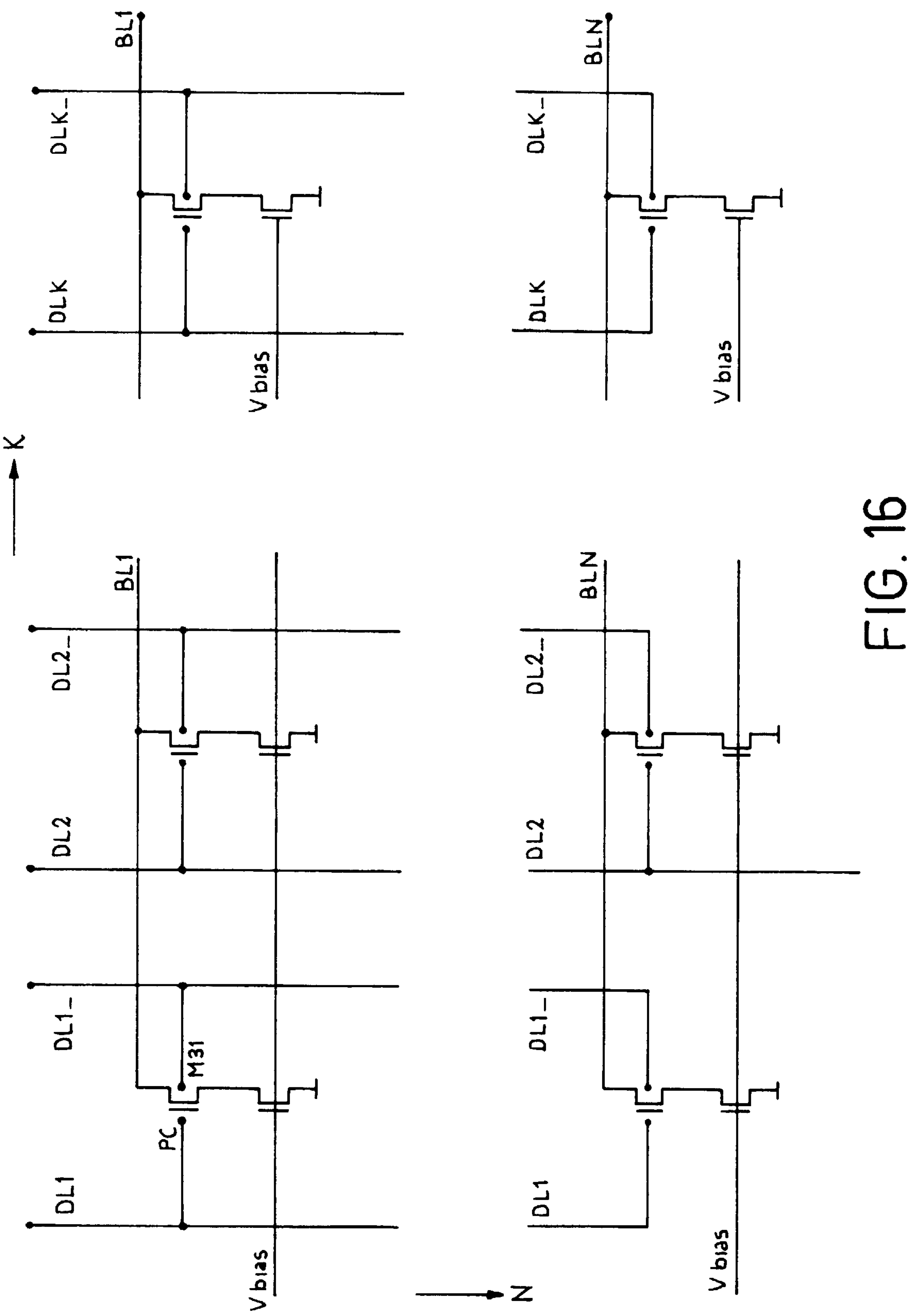


FIG. 16